# EUROPEAN PATENT SPECIFICATION

(11) **EP 0 270 666 B1**
(45) Date of publication and mention of the grant of the patent: **28.08.1996**
(21) Application number: 87904751.2
(22) Date of filing: 05.06.1987
(51) Int. Cl.: B32B 9/00

(54) **NOVEL CARBON FIBRILS, METHOD FOR PRODUCING SAME, AND COMPOSITIONS CONTAINING SAME**
NEUE KOHLENFASERN, VERFAHREN ZU IHRER HERSTELLUNG UND DIESE ENTHALTENDE ZUSAMMENSETZUNGEN
NOUVELLES FIBRILLES DE CARBONE, PROCEDE POUR LEUR PRODUCTION ET COMPOSITIONS LES RENFERMANT

(30) Priority: 06.06.1986 US 871675; 06.06.1986 US 871676; 06.06.1986 US 872215
(43) Date of publication of application: 15.06.1988
(73) Proprietor: HYPERION CATALYSIS INTERNATIONAL, INC., Lexington, MA 02173 (US)
(72) Inventor: TENNENT, Howard, G., Kennett Square, PA 19348 (US); BARBER, James, J., Arlington, MA 02174 (US); HOCH, Robert, Middle Village, NY 11379 (US)
(74) Representative: Cropp, John Anthony David
(86) International application number: US8701317
(87) International publication number: WO8707559

(56) References cited:
- US-A- 4 504 454
- US-A- 4 663 230
- JAPANESE JOURNAL OF APPLIED PHYSICS, vol. 11, no. 4, April 1972, pages 445-449, Tokyo, JP; T. KOYAMA et al.: "Carbon fibers obtained by thermal decomposition of vaporized hydrocarbon"
- Kirk-Othmer's Encyclopedia of Chemical Technology, vol. 4; 3rd. ed. (1978); John Wiley & Sons, New York (US), p. 622
- Kirk-Othmer's Encyclopedia of Chemical Technology, vol. 6; 3rd. ed (1979); John Wiley & Sons, New York (US); p. 687

## Description

### BACKGROUND OF THE INVENTION

This invention relates to the production of graphitic carbon fibrils having high surface area, high Young's modulus of elasticity and high tensile strength. More specifically, it relates to such fibrils grown catalytically from inexpensive, readily available carbon pre-cursors without the need for usual and expensive graphitizing temperatures (approximately 2900°C).

Fiber-reinforced composite materials are becoming increasingly important because their mechanical properties, notably strength, stiffness and toughness, are superior to the properties of their separate components or of other non-composite materials. Composites made from carbon fibers excel in strength and stiffness per unit weight, hence they are finding rapid acceptance in aerospace and sporting goods applications. Their high cost, however, inhibits wider use.

Carbon fibers are currently made by controlled pyrolysis of continuous filaments of precursor organic polymers, notably cellulose or polyacrylonitrile, under carefully maintained tension, which is needed to insure proper orientation of the anisotropic sheets of carbon atoms in the final filaments. Their high cost is a consequence of the cost of the preformed organic fibers, the weight loss in carbonization, the slow rate of carbonization in expensive equipment and the careful handling necessary to avoid breaks in the continuous filaments.

There has been intense development of methods of spinning and carbonizing hydrocarbon pitch fiber to reduce precursor filament cost and weight loss. So far, the pitch pre-treatment, spinning conditions and post-treatments needed to insure correct orientation of the sheets of carbon atoms in the final products have been nearly as expensive as the previously noted method involving organic polymers. Both methods require use of continuous filaments to achieve high orientation and, thereby, optimum properties. There is a practical lower limit of fiber diameter, i.e., 6 to 8 micrometers, below which fiber breakage in spinning and post-treatments becomes excessive.

An entirely distinct approach to carbon fiber formation involves the preparation of carbon filaments through the catalytic decomposition at metal surfaces of a variety of carbon-containing gases, e.g., CO/H₂, hydrocarbons, and acetone. These filaments are found in a wide variety of morphologies (e.g., straight: twisted, helical, branched) and diameters (e.g., ranging from tens of angstroms to tens of microns). Usually, a mixture of filament morphologies is obtained, frequently admixed with other, non-filamentous carbon (cf. Baker and Harris, Chemistry and Physics of Carbon, Vol. 14, 1978). Frequently, the originally formed carbon filaments are coated with poorly organized thermal carbon. Only relatively straight filaments possessing relatively large graphitic domains oriented with their c-axes perpendicular to the fiber axis and possessing little or no thermal carbon overcoat will impart the properties of high strength and modulus required in reinforcement applications.

Most reports that cite formation of filamentous carbon do not document the particular type of filaments formed, so that it is impossible to determine whether the filaments are suitable for reinforcement applications. For example, Baker et al., in British Patent 1,499,930 (1977), disclose that carbon filaments are formed when an acetylene or diolefin is decomposed over catalyst particles at 675-775°C. No description of the structure of these filaments is given, however. In European Patent Application EP 56,004 (1982), Tates and Baker describe the formation of filamentous carbon over FeOₓ substrates, but again do not disclose any information concerning the structure of the carbon filaments formed. Bennett et al., in United Kingdom Atomic Energy Authority Report AERE-R7407, describe the formation of filamentous carbon from catalytic decomposition of acetone, but also fail to give any indication of the morphology, and hence suitability for reinforcement applications, of the carbon formed.

Several groups of workers have disclosed the formation of straight carbon filaments through catalytic decomposition of hydrocarbons. Oberlin, Endo, and Koyama have reported that aromatic hydrocarbons such as benzene are converted to carbon fibers with metal catalyst particles at temperatures of around 1100°C, Carbon 14:133 (1976). The carbon filaments contain a well ordered, graphitic core of approximately the diameter of a catalyst particle, surrounded by an overcoat of less organized thermal carbon. Final filament diameters are in the range of 0.1 to 80 microns. The authors infer that the graphitic core grows rapidly and catalytically, and that thermal carbon subsequently deposits on it, but state that the two processes cannot be separated "because they are statistically concomitant." Journal of Crystal Growth 32:335 (1976). The native fibers, coated with thermal carbon, possess low strength and stiffness, and are not useful as a reinforcing filler in composites. An additional high temperature treatment at 2500-3000°C is necessary to convert the entire filament to highly ordered graphitic carbon. While this procedure may be an improvement on the difficult and costly pyrolysis of preformed organic fibers under tension, it suffers from the drawback that a two step process of fiber growth and high temperature graphitization is required. In addition, the authors state nothing regarding deliberate catalyst preparation, and catalyst particles appear to be adventitious. In more recent work, preparation of catalytic particles is explored, but the two processes of catalytic core growth and thermal carbon deposition are again not separated, Extended Abstracts, 16th Biennial Conference on Carbon: 523 (1983).

Tibbetts has described the formation of straight carbon fibers through pyrolysis of natural gas in type 304 stainless steel tubing at temperatures of 950-1075°C, Appl. Phys. Lett. 42(8):666 (1983). The fibers are reported to grow in two stages similar to those seen by Koyama and Endo, where the fibers first lengthen catalytically and then thicken by pyrolytic deposition of carbon. Tibbetts states that these stages are "overlapping", and he is unable to grow filaments free of pyrolytically deposited carbon. In addition, Tibbetts's approach is commercially impractical for at least two reasons. First, initiation of fiber growth occurs only after slow carbonization of the steel tube (typically about ten hours), leading to a low overall rate of fiber production. Second, the reaction tube is consumed in the fiber forming process, making commercial scale-up difficult and expensive.

It has now unexpectedly been found that it is possible to catalytically convert hydrocarbon precursors to carbon filaments substantially free of pyrolytically deposited thermal carbon, and thereby to avoid the thickening stage reported in the prior art as "overlapping" and "concomitant" with the filament lengthening stage. This ability allows the direct formation of high strength fibrils useful in the reinforcement of matrices, in the preparation of electrode materials of very high surface area, and in the shielding of objects from electromagnetic radiation.

### SUMMARY OF THE INVENTION

This invention concerns one or a plurality of cylindrical discrete carbon fibril characterized by a substantially constant diameter between 3.5 and 70 nanometers, e.g. between about 7 and 25 nanometers, length greater than 5 times the diameter and less than about 100 times the diameter, an outer region of multiple essentially continuous layers of ordered carbon atoms and a distinct inner core region, each of the layers and the core being disposed substantially concentrically about the cylindrical axis of the fibril. The fibril is free of pyrolytically deposited thermal carbon.

The inner core of the fibril may be hollow or may contain carbon atoms which are less ordered than the ordered carbon atoms of the outer region, which are graphitic in nature.

The fibril of this invention may be produced by contacting for an appropriate period of time and at a suitable pressure a suitable metal-containing particle with a suitable gaseous, carbon-containing compound, at a temperature between about 850°C and about 1200°C, the ratio on a dry weight basis of carbon-containing compound to metal-containing particle being at least about 100:1.

A carbon fibril may also be continuously produced by continuously contacting for an appropriate period of time at a suitable pressure suitable metal-containing particles with a suitable gaseous, carbon-containing compound, at a temperature between about 850°C and about 1200°C, and recovering the fibrils so produced. The fibrils produced by this method may be recovered in association with the fetal-containing particles or, alternatively, separated from the metal-containing particles and recovered. The continuous contacting may be effected by continuously introducing the gaseous, carbon-containing compound into a reaction -zone containing the metal-containing particles and continuously withdrawing the gaseous carbon-containing compound from the reaction zone, or by continuously introducing the metal-containing particles into a reaction zone containing a defined volume of the gaseous, carbon-containing compound and continuously withdrawing the metal-containing particles from the reaction zone, or by continuously introducing both the metal-containing particles and the gaseous, carbon-containing compound into a reaction zone and continuously withdrawing both from the reaction zone.

In the above-mentioned method for continuously producing carbon fibrils, the withdrawn gaseous, carbon-containing compound or the withdrawn metal-containing particles may be treated so as to remove any undesirable material, i.e. impurities or reaction by-products, and then reintroduced into the reaction zone.

It is further contemplated that a portion of the fibrils in association with the metal-containing particles may be continuously recovered, dispersed with additional metal-containing particles, and continuously reintroduced into contact with the gaseous carbon-containing compound.

The contacting of the metal-containing particle with the carbon-containing compound may be carried out in the presence of a compound, e.g. CO₂, H₂ or H₂O, capable of reaction with carbon to produce gaseous products.

Suitable carbon-containing compounds include hydrocarbons, including aromatic hydrocarbons, e.g. benzene, toluene, xylene, cumene, ethylbenzene, naphthalene, phenanthrene, anthracene or mixtures thereof; non-aromatic hydrocarbons, e.g., methane, ethane, propane, ethylene, propylene or acetylene or mixtures thereof; and oxygen-containing hydrocarbons, e.g. formaldehyde, acetaldehyde, acetone, methanol, or ethanol or mixtures thereof; and include carbon monoxide.

The suitable metal-containing particle may be a cobalt-, nickel-, or iron-containing particle, including a particle derived from a metal salt that is thermally decomposable at a temperature below about 1200°C, having a diameter between about 3.5 and about 70 nanometers.

Such particles may be supported on a chemically compatible, refractory support, e.g., a support of alumina; carbon, including carbon fibers, carbon fibrils, or carbon plates; or a silicate, including an aluminum silicate.

The suitable metal-containing particle may be encapsulated in carbon or a carbon-containing compound of e.g., a carbide or an organic polymer, including polystyrene and starch.

In one embodiment, the surface of the metal-containing particle is independently heated, e.g. by electromagnetic radiation, to a temperature between about 850°C and about 1800°C, the temperature of the particle being higher than the temperature of the gaseous, carbon-containing compound.

In a specific embodiment, the metal-containing particle is contacted with the carbon-containing compound for a period of time from about 10 seconds to about 30 minutes at a pressure of from about one-tenth atmosphere to about ten atmospheres. In this embodiment, the metal-containing particle is an iron-containing particle, the gaseous carbon-containing compound is carbon monoxide and the reaction temperature is between 900°C and 1150°C. The contacting may be carried out in the presence of gaseous hydrogen. Additionally, the iron-containing particle may be a particle derived from iron oxalate and may be supported on a chemically compatible, refractory support of e.g., carbon.

This invention also concerns a method for producing a substantially uniform plurality of essentially cylindrical, discrete carbon fibrils which comprises contacting for an appropriate period of time and at a suitable pressure, suitable metal-containing particles with a suitable gaseous, carbon-containing compound, at a temperature between about 850°C and about 1200°C. Preferably, each of the fibrils so produced has a diameter substantially equal to the diameter of each other fibril. In one embodiment the metal-containing particles are pre-formed.

The fibrils are useful in composites having a matrix of e.g., an organic polymer, an inorganic polymer, a metal, an adhesive, or a ceramic material. The fibrils may be dispersed in the matrix, oriented into tows of fibrils which are dispersed in the matrix, or entangled together to form a fibril mat which is disposed in the matrix.

Another aspect of this invention concerns a "furry" fiber, a "furry" plate, or a branched fibril which comprises a carbon fiber, a carbon plate, or a carbon fibril, respectively, and a plurality of carbon fibrils adhering to the outer surface of the fiber, plate, or fibril, respectively. A method for producing furry fibers, furry plates, or branched fibrils comprises dispersing suitable metal-containing particles on the outer surface of a carbon fiber, plate, or fibril, respectively, and contacting with a suitable gaseous, carbon-containing compound for an appropriate period of time and at a suitable pressure. Composites comprising a matrix and furry fibers, furry plates, or branched fibrils may be produced by e.g., dispersion or impregnation.

Carbon fibrils (including tows of fibrils), fibril mats, furry fibers, furry plates or branched fibrils may be used to reinforce a structural material, to enhance the electrical or thermal conductivity of a material, to increase the surface area of an electrode or an electrolytic capacitor plate, to provide a support for a catalyst, or to shield an object from electromagnetic radiation.

### BRIEF DESCRIPTION OF THE FIGURES

Fig. 1. A dispersion of catalyst particles comprised of Fe₃O₄.

Fig. 2. A dispersion of catalyst particles comprised of Fe₃O₄.

Fig. 3. Catalyst particles encapsulated in 5-15 nm (50-150 angstrom) carbon sheaths.

Fig. 4. Numerous 10-45 nm (100-450 angstrom) diameter fibrils, together with catalyst support and reaction debris.

Fig. 5. A fibril with a diameter of approximately 25 nm (250 angstroms), together with catalyst support and reaction debris.

Fig. 6. Schematic Diagram of the Continuous Production of Carbon Fibrils.

### DETAILED DESCRIPTION OF THE INVENTION

An essentially cylindrical carbon fibril may be produced in accordance with this invention, said fibril being characterized by a substantially constant diameter between 3.5 and 70 nanometers, a length greater than 5 times the diameter and less than 100 times the diameter, an outer region of multiple layers of ordered carbon atoms and a distinct inner core region, each of the layers and the core being disposed concentrically about the cylindrical axis of the fibril. The entire fibril is substantially free of thermal carbon overcoat. The term "cylindrical" is used herein in the broad geometrical sense, i.e., the surface traced by a straight line moving parallel to a fixed straight line and intersecting a curve. A circle or an ellipse are but two of the many possible curves of the cylinder.

The inner core region of the fibril may be hollow, or may comprise carbon atoms which are less ordered than the ordered carbon atoms of the outer region. "Ordered carbon atoms," as the phrase is used herein means graphitic domains having their c-axes substantially perpendicular to the cylindrical axis of the fibril.

In one embodiment, the length of the fibril is greater than about 20 times the diameter of the fibril. In another embodiment, the fibril diameter is between about 7 and about 25 nanometers. In another embodiment the inner core region has a diameter greater than about 2 nanometers.

A method for producing a carbon fibril according to this invention comprises treating a second essentially cylindrical discrete carbon fibril characterized by a substantially constant diameter between about 3.5 and about 70 nanometers, length greater than about 10² times the diameter, an outer region of multiple essentially continuous layers of ordered carbon atoms and a distinct inner core region, each of the layers and the core being disposed substantially concentrically about the cylindrical axis of the fibril.

It is contemplated that various treating means are suitable for producing the carbon fibril. In one embodiment, treating comprises fragmenting the second carbon fibril by mechanical means, e.g., grinding, milling. In another embodiment, treating comprises altering the second carbon fibril with shear forces that are produced in a fluid medium. More specifically, the second carbon fibril is contained in a liquid or semi-liquid medium, e.g., a monomer or a matrix. The medium is subjected to processing or handling operations, e.g., extrusion, injection, or molding, so as to produce shear forces sufficient to alter the second fibril into a fibril in accordance with this invention.

Methods for producing essentially cylindrical, discrete carbon fibrils according to this invention may comprise contacting for an appropriate period of time and at a suitable pressure a catalyst, i.e., a suitable discrete metal-containing particle, with a suitable precursor, i.e., a suitable gaseous, carbon-containing compound, at a temperature between about 850°C and about 1200°C. The ratio on a dry weight basis of carbon-containing compound (precursor) to metal-containing particle (catalyst) is suitably at least about 100:1.

A method for continuously producing carbon fibrils comprises continuously contacting for an appropriate period of time and at a suitable pressure, suitable discrete, metal-containing particles (catalyst), with a suitable gaseous, carbon-containing compound, (precursor), at a temperature between about 850°C and about 1200°C, and recovering the fibrils so produced. In one embodiment, the fibrils may be recovered in association with the metal-containing particles. In another embodiment the fibrils may be separated and recovered from the particles, e.g., by extraction of the metal particles into 10% aqueous solution of hydrochloric acid. The continuous contacting in one embodiment is effected by continuously introducing the precursor into a reaction zone containing the catalyst particles and continuously withdrawing the precursor from the reaction zone, e.g., a flow tower reactor with a packed bed or fluidized bed of catalyst. In another embodiment, contacting is effected by continuously introducing the catalyst particles into a reaction zone containing the precursor and continuously withdrawing the catalyst from the reaction zone. In another embodiment, contacting is effected by continuously introducing both the catalyst particles and the precursor into a reaction zone and continuously withdrawing both from the reaction zone, e.g., a continuous cocurrent or countercurrent flow tower.

In the above-mentioned method for continuously producing carbon fibrils, the withdrawn precursor, catalyst, or both may be treated so as to remove any undesirable material, e.g., impurities, inactive catalyst, or by-products formed during fibril production, and then reintroduced into the reaction zone. In one embodiment where the precursor is carbon monoxide, the effluent gas, which is predominantly carbon monoxide, carbon dioxide and trace amounts of impurities, may be treated by purging a portion of the effluent gas and adding a relatively pure amount of carbon monoxide. Alternately, the effluent gas may be treated by scrubbing with a suitable carbon dioxide-absorbing compound such as monoethanolamine (MEA). Still another method of treatment comprises converting the carbon dioxide present in the effluent gas to carbon monoxide, e.g., by passing the effluent gas over or through a carbon source. In an embodiment where the precursor is a gaseous hydrocarbon, treatment of the effluent gas may comprise removing the hydrogen produced during fibril production. In another embodiment where the withdrawn catalyst is treated and reintroduced, treatment may comprise separating the active catalyst from the inactive catalyst by magnetic means.

In another embodiment of the continuous production of carbon fibrils, a portion of the fibrils in association with the metal-containing particles may be continuously recovered, treated with additional metal-containing particles and the fibrils so treated are continuously reintroduced into contact with the gaseous, carbon-containing compound. Treatment may comprise forming a dispersion of catalyst on the fibrils as exemplified in example 38.

It is contemplated that a variety of carbon-containing compounds are suitable as precursors when used with an appropriate combination of reaction parameters, in accordance with this invention. In one presently preferred embodiment, the precursor is carbon monoxide. In other embodiments, suitable precursors include hydrocarbons. A hydrocarbon precursor may be aromatic, e.g. benzene, toluene, xylene, cumene, ethylbenzene, naphthalene, phenanthrene, anthracene or mixtures thereof. Alternatively, the hydrocarbon may be non-aromatic, e.g. methane, ethane, propane, ethylene, propylene or acetylene or mixtures thereof. In another presently preferred embodiment, the hydrocarbon is methane based upon its availability, thermal stability and lack of toxicity. The hydrocarbon may also contain oxygen, e.g. alcohols such as methanol or ethanol, ketones such as ace tone, and aldehydes such as formaldehyde or acetaldehyde or mixtures thereof.

Important reaction parameters, in addition to the particular precursor, include catalyst composition and pretreatment, catalyst support, precursor temperature, catalyst temperature, reaction pressure, residence time or growth time, and feed composition, including the presence and concentrations of any diluents (e.g., Ar) or compounds capable of reaction with carbon to produce gaseous products (e.g., CO₂, H₂, or H₂O). It is contemplated that the reaction parameters are highly interdependent, and that the appropriate combination of the reaction parameters will depend on the specific precursor carbon-containing compound.

It is further contemplated that a variety of transition metal-containing particles are suitable as catalysts when used with an appropriate combination of reaction parameters. In a presently preferred embodiment, the metal-containing particle comprises a particle having a diameter between about 3.5 and about 70 nanometers and contains iron, cobalt or nickel, or an alloy or mixture thereof. Suitable particles may also be derived from metal salts that thermally decompose to metallic particles or metallic oxide particles at temperatures equal to or below fibril formation temperatures, i.e. below about 1200°C. Such metal salts include carbonates, bicarbonates, nitrates, citrates, and oxalates, e.g., iron oxalate.

In one embodiment, the metal-containing particle is contacted with the carbon-containing compound in the presence of a compound capable of reaction with carbon to produce gaseous products. In one such embodiment, the compound capable of reacting with carbon is CO₂, H₂, or H₂O.

It is desirable that catalyst particles be of reasonably uniform diameter and that they be isolated from one another, or at least held together in only weakly bonded aggregates. The particles need not be in an active form before they enter the reactor, so long as they are readily activated through a suitable pretreatment or under reaction conditions. The choice of a particular series of pretreatment conditions depends on the specific catalyst and carbon-containing compound used, and may also depend on other reaction parameters outlined above. Exemplary pretreatment conditions are provided in the Examples which follow. The metal-containing particles may be precipitated as metal oxides, hydroxides, carbonates, carboxylates, nitrates, etc., for optimum physical form. Well-known colloidal techniques for precipitating and stabilizing uniform, very small particles are applicable. For example, the techniques described by Spiro et al. for precipitating hydrated ferric oxide into easily dispersible uniform spheres a few nanometers in diameter, are very suitable for catalyst preparation, J. Am. Chem. Soc.88(12):2721-2726(1966); 89(2):5555-5559 and 5559-5562(1967). These catalyst particles may be deposited on chemically compatible, refractory supports. Such supports must remain solid under reaction conditions, must not poison the catalyst, and must be easily separated if necessary from the product fibrils after they are formed. Alumina, carbon, quartz, silicates, and aluminum silicates such as mullite may be suitable support materials. For ease of removal, their preferred physical form is thin films or plates which can easily be moved into and out of the reactor. It is further contemplated that carbon fibers or preformed carbon fibrils may be suitable support material.

A preferred method for isolating catalyst particles from one another comprises encapsulating the particles in carbon or a carbon-containing compound, e.g. a carbide, at conditions not conducive to fibril formation. In one embodiment where the catalyst is an iron-containing particle, encapsulation is performed by pretreating the particles for a suitable period to time with a carbon-containing compound, e.g., carbon monoxide or acetylene, at a temperature too low to form fibrils, e.g., below 800°C, so as to encase the particles in carbon or iron carbide. In a preferred embodiment of this method, iron oxalate particles are pretreated for about one hour with a mixture of argon and acetylene in a 9:1 volume ratio at about 400°C. During the pretreatment, the iron oxalate particles are converted by thermal decomposition to iron-containing particles which are encased in a carbon-containing polymer. The encapsulated iron particles may be used in this form as catalyst for fibril formation or the particles may be oxidized under suitable conditions, e.g., contacting with air or a diluted oxygen-containing gas for about 2 hours at 350°C, to form iron oxide particles.

It is further contemplated that the catalyst particles may be encapsulated in an organic polymer, e.g. polystyrene or starch.

It is also contemplated that a higher productivity of carbon fibrils may be achieved by initiating fibril growth throughout the reactor volume. Method of initiating fibril growth include dispersing finely divided and evenly distributed catalyst particles throughout the reactor volume. The particles may be performed or formed by thermolysis of a metal-containing vapor in the reactor itself. For example, iron particles may be formed from ferrocene vapor.

The reaction temperature must be high enough to cause the catalyst particles to be active for fibril formation, yet low enough to avoid significant thermal decomposition of the gaseous carbon-containing compound with formation of pyrolytic carbon. The precise temperature limits will depend on the specific catalyst system and gaseous carbon-containing compound used. For example, benzene is kinetically thermally stable to about 1000°C, methane to about 950°C, and acetylene to about 500°C. In cases where thermal decomposition of the gaseous carbon-containing compound occurs at a temperature near or below that required for an active, fibril-producing catalyst, the catalyst particle may be heated selectively to a temperature greater than that of the gaseous carbon-containing compound. Such selective heating may be achieved, for example, by electro-magnetic radiation.

The carbon fibril of this invention may be produced at any desirable pressure, and the optimum pressure will be dictated by economic considerations. Preferably, the reaction pressure is between one-tenth and ten atmospheres. More preferably, the reaction pressure is about atmospheric pressure.

In one embodiment, the fibril is produced by contacting for a period of time from about 10 seconds to about 30 minutes and at a pressure of about one atmosphere, a suitable iron-containing particle with gaseous carbon monoxide at a temperature of about 1000°C, the ratio on a dry weight basis of carbon monoxide to iron-containing particle being greater than about 1000:1. In another embodiment the fibril is produced by contacting for from about one minute to about five minutes and at a pressure of about one atmosphere, a suitable iron-containing particle with benzene (gaseous) in an approximately 9:1 hydrogen: benzene mixture at a temperature of about 1100°C, the ratio on a dry weight basis of carbon-containing compound to iron-containing particle being greater than about 1000:1. In a preferred embodiment of this method, the iron-containing particle is supported on a chemically compatible, refractory support, as previously described. Preferably such refractory support is alumina.

Fibrils made according to this invention are highly graphitic as grown. The individual graphitic carbon layers are concentrically arranged around the long axis of the fiber like the growth rings of a tree, or like a scroll of hexagonal chicken wire. There is usually a hollow core a few nanometers in diameter, which may be partially or wholly filled with less organized carbon. Each carbon layer around the core may extend as much as several hundred nanometers. The spacing between adjacent layers may be determined by high resolution electron microscopy, and should be only slightly greater than the spacing observed in single crystal graphite, i.e., about 0.339 to 0.348 nanometers.

There are no methods for direct measurement of the physical properties of such small fibrils. However, the stiffness of composites containing the fibrils are those expected from the Young's moduli which have been measured on larger, well graphitized carbons.

Another aspect of this invention concerns a method for producing a substantially uniform plurality of essentially cylindrical, discrete carbon fibrils. The plurality of fibrils is substantially uniform in the sense that the diameter of each fibril is substantially equal to the diameter of each other fibril. Preferably each of the fibrils is substantially free of thermally deposited carbon. The method for producing such a plurality involves continuously contacting for an appropriate period of time and at a suitable pressure, suitable metal-containing particles, with a suitable gaseous carbon-containing compound as previously discussed, at a temperature between 850°C and 1200°C. By this method a substantially uniform plurality of fibrils, e.g. each having a diameter substantially equal to the diameter of each other fibril, may be obtained.

Another aspect of this invention concerns a composite which comprises carbon fibrils as described above, including composites serving as structural materials. Such a composite may also comprise a matrix of pyrolytic or non-pyrolytic carbon or an organic polymer such as a polyamide, polyester, polyether, polyimide, polyphenylene, polysulfone, polyurethane or epoxy resin, for example. Preferred embodiments include elastomers, thermoplastics and thermosets.

In another embodiment, the matrix of the composite is an inorganic polymer, e.g. a ceramic material or polymeric inorganic oxide such as glass. Preferred embodiments include plate glass and other molded glass, silicate ceramics, and other refractory ceramics such as aluminum oxide, silicon carbide, silicon nitride and boron nitride.

In still another embodiment the matrix of the composite is a metal. Suitable metals include aluminum, magnesium, lead, copper, tungsten, titanium, niobium, hafnium, vanadium, and alloys and mixtures thereof.

In still another embodiment, the matrix of the composite is an adhesive.

It is contemplated that the carbon fibrils of this invention may be dispersed into the matrix, oriented in the matrix by means of e.g., electrical fields, appropriate shearing action or combing, embedded in the matrix by e.g., impregnation, or injected into the matrix, e.g., by means of spray guns.

Carbon fibrils may also be produced in-situ in porous matrices such as ceramic material. In one embodiment, such in-situ production comprises dispersing catalyst in the ceramic matrix and catalytically growing the fibrils in the matrix by passing a gaseous, carbon-containing compound through the porous ceramic matrix.

It is further contemplated that a plurality of carbon fibrils may be prepared in such a way so as to form a fibril mat. In one embodiment of the method for continuously producing carbon fibrils, a mat may be produced by collecting or recovering the fibrils on a support plate or filter. Suitable recovery filters include surface filters, e.g. screens, and depth filters, e.g. a bed of sand or body of liquid, including a monomer or low oligomer of a polymer. In another embodiment, the fibrils may be entangled so as to form a mat.

Another aspect of this invention concerns a "furry" fiber, a "furry" plate, or a branched fibril which comprises a carbon fiber, a carbon plate, or a carbon fibril, respectively, and a plurality of carbon fibrils adhering to the outer surface of the fiber, plate, or fibril, respectively. A method for producing furry fibers, furry plates, or branched fibrils comprises dispersing suitable metal-containing particles on the outer surface of a carbon fiber, plate, or fibril, respectively, and contacting with a suitable gaseous, carbon-containing compound for an appropriate period of time and at a suitable pressure.

Another aspect of this invention concerns a composite which comprises fibril mats, furry fibers, furry plates, or branched fibrils, as described above. It is contemplated that fibril mats, furry fibers, furry plates, and branched fibrils may be disposed in a matrix of a composite by the same means described above for carbon fibrils, e.g. dispersion, impregnation, injection, etc.

The carbon fibrils, fibril mats, furry fibers, furry plates and branched fibrils are useful in various applications. One application is a method for reinforcing a structural material by incorporating therein an effective reinforcing amount of carbon fibrils, furry fibers, furry plates, or branched fibrils. Another application is a method for increasing the surface area of an electrode or electrolytic capacitor plate by attaching thereto one or more carbon fibrils, mats, furry fibers, furry plates or branched fibrils. Another application is a method for supporting a catalyst which comprises attaching a catalyst to the fibril, mat, fiber or plate of this invention. Such catalyst may be an electrochemical catalyst.

Still another application is a method of enhancing the electrical conductivity of a material. According to this method an effective electrical conductivity enhancing amount of carbon fibrils, mats, furry fibers, furry plates or branched fibrils is incorporated in the material.

A further use is a method of enhancing the thermal conductivity of a material. In this method an effective thermal conductivity enhancing amount of carbon fibrils, mats, furry fibers, furry plates or branched fibrils is incorporated in the material.

An additional use is a method of shielding an object from electromagnetic radiation by incorporating therein an effective shielding amount of carbon fibrils, mats, furry fibers, furry plates or branched fibrils.

This invention is illustrated in the examples which follow.

### Examples

### Materials

The following materials used in the examples below may be obtained from commercial sources: Benzene (reagent grade), Fe(NO₃)₃·9H₂O (Baker Analyzed Crystal), FeSO₄·7H₂O (Baker Analyzed Granular), KNO₃ (Baker Analyzed Crystal) and NaHCO₃ (Baker Analyzed Crystal) may all be obtained from J.T. Baker Chemical Company, Phillipsburg, New Jersey. CO (C.P. Grade), hydrogen (H₂), and argon (Ar) may be obtained from Air Products and Chemicals, Inc., Allentown, Pennsylvania. KOH (C.P. Pellets) may be obtained from Mallinckrodt Inc., Lodi, New Jersey. Water used in the examples was deionized. Vycor® glass tubes may be obtained from Corning Glass Works, Corning, New York. Ceramic combustion boats may be obtained from Coors Porcelain Co., Golden Colorado. Iron oxalate crystals (99.999% iron (II) oxalate dehydrate) may be obtained from Aldrich Chemical Company, Inc., Milwaukee, Wisconsin. Starch solution (Corn Products starch 3005) may be obtained from CPC International Inc., Englewood Cliffs, New Jersey. Digylcidyl ether of bisphenol A (DGEBA) (Araldite 6005) may be obtained from Ciba-Geigy Corp., Ardsley, New York.

Davison SMR-37-1534 SRA alumina is an α-boehmite with an average crystallite size of 1.5 nm (15 angstroms), an average agglomerate size of 0.2 microns, and an average particle size of 15 microns.

Degussa Aluminum Oxid C is a γ-alumina with a surface area of 100 m²/g, an average particle size of 20 nm (200 angstroms), and an apparent bulk density of 60 g/L.

Cabot Sterling R V-9348 carbon powder is a furnace black with a minimum carbon content of 99.5%, a surface area of 25 m²/g, an average particle size of 75 nm (750 angstroms), and an apparent density of 256.23 kg/m³ (16 x 453,6 g/0.0283 m³) (16 lb/ft³).

### Analyses

All electron micrographs were obtained from a Zeiss EM-10 Electron Microscope.

### Catalyst Preparations

### Example 1: Preparation of Catalyst 1

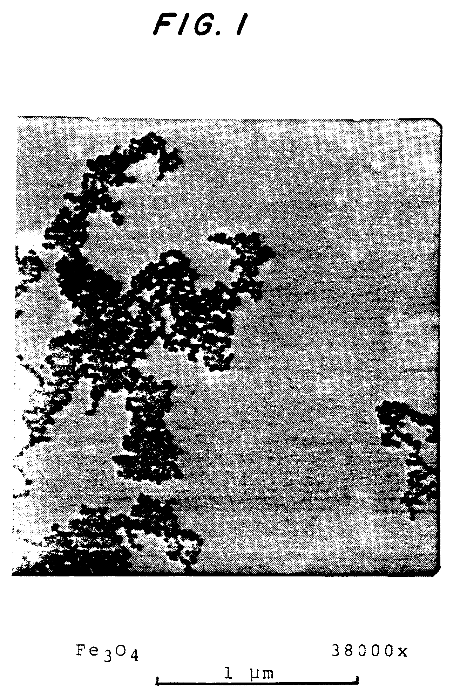

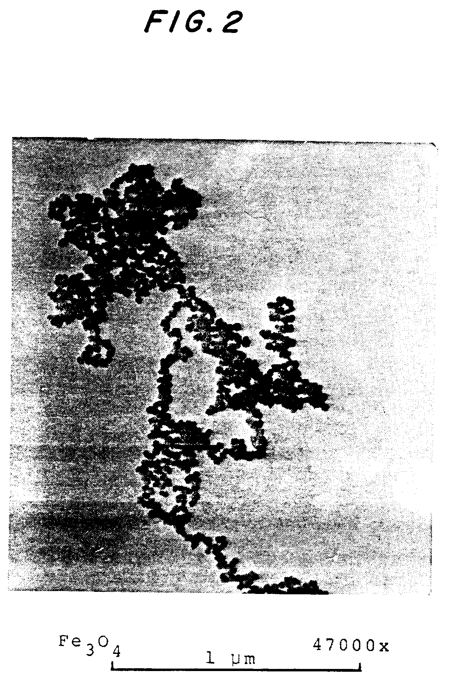

A magnetite dispersion was prepared according to the method of Sugimoto and Matijevic, J. Colloid & Interfacial Sci. 74:227 (1980). Electron microscopy reveals the particle size range to be from 17.5 to 40 nm (175 to 400 angstroms), with 26 nm (260 angstroms) being the approximate average (Figures 1 and 2).

### Example 2: Preparation of Catalyst 2

Into a 113,39 g (4 oz) wide-mouth glass jar with a magnetic stirring bar was placed 10 g Davison SMR-37-1534 SRA alumina powder. To the stirred powder 0.81 M Fe(NO₃)₃ in H₂O was added dropwise to the point of incipient wetness. 4.1 mL was required.

### Example 3: Preparation of Catalyst 3

A portion of the wet powder obtained in Example 2 was heated in the jar with stirring on a hot plate until dry. The temperature was kept below that at which NOₓ evolved.

### Example 4: Preparation of Catalyst 4

A portion of Davison SMR-37-1534 SRA alumina powder was calcined in an air stream at 900°C for 90 min in a Vycor® tube. In a 4 oz wide-mouth jar with magnetic stirring bar was placed 1.9977 g of the calcined Al₂O₃. While it was being stirred, 0.81 M Fe(NO₃)₃ solution in H₂O was added dropwise to incipient wetness. 0.6 mL was required. The wet powder was dried with stirring on a hot plate.

### Example 5: Preparation of Catalyst 5

Into a 4-in cappable serum polymerization tube was weighed 0.44 g Degussa Aluminum Oxid C (fumed Al₂O₃). The tube was capped and argon sparged, after which 1 mL 0.5 M KOH, 1 mL 2.0 M KNO₃, and 6 mL prefiltered deionized water were injected. The mixture was argon sparged 5 min, then 2.0 mL 0.101 M FeSO₄ was injected. The mixture was sparged with argon 1 min. The tube was placed in a 90°C oil bath and the argon sparge continued for 5 min. Sparging was discontinued and quiescent digestion begun. (The oil bath temperature control was faulty, and temperature rose to 105°C. The bath was cooled back to 90°C.) Total digestion time was 2 h.

The system on standing separated into a white precipitate and clear supernate. It was centrifuged, the supernate decanted, the precipitate resuspended in prefiltered, deionized water. This was repeated two more times. The pH on the final supernate was approximately 8.5. The water was decanted, the precipitate blown semi-dry with argon, and resuspended in ethanol.

### Example 6: Preparation of Catalyst 6

A portion of Davison SMR-37-1534 SRA alumina powder was calcined 2 h in an air stream at 900°C in a Vycor® tube. One gram of the product was placed in a cappable 4-in polymerization tube and enough 1.6 M Fe(NO₃)₃ solution was added to cover the alumina completely. The tube was capped and evacuated until bubbling ceased. It was vented and the excess liquid filtered off through an M glass fritted filter. The moist cake was calcined in a ceramic boat for 1 h in an air stream at 500°C.

### Example 7: Preparation of Catalyst 7

In a centrifuge bottle 6.06 g Fe(NO₃)₃·9H₂O was dissolved in 50 mL prefiltered deionized H₂O. To the solution was added 2.52 g NaHCO₃. When foaming ceased, the solution was sparged 5 min with argon. The product Fe₂O₃ sol was a clear solution.

A portion of Cabot Sterling R V-9348 carbon powder was calcined in a argon stream in a Vycor® boat in a mullite tube at 1100°C for 1 h. It was cooled to room temperature under argon. Into a 4-in polymerization tube enough carbon was placed to make about 0.25 in layer. The tube was evacuated and 2 mL Fe₂O₃ solution was added. When bubbling ceased, the tube was vented and the suspension filtered on a M-glass fritted funnel. The cake was air-dried and heated for 1 h at 500°C under an argon stream in a Vycor® tube.

### Example 8: Preparation of Catalyst 8

In a 4-in polymerization tube a 0.4876 g portion of calcined Cabot Sterling R V-9348 carbon powder was evacuated and 2.0 mL 0.81 M Fe(NO₃)₃ solution was added. When bubbling ceased, the tube was vented and the cake air-dried.

### Example 9: Preparation or Catalyst 9

A pellet was made by compressing Cabot Sterling R V-9348 powder in a stainless die (for making KBR discs for infra-red). 0.12 g of the pellet was evacuated in a 4-in polymerization tube and 0.05 mL of a freshly-prepared Fe₂O₃ sol (prepared as in Example 7) was added. The tube was vented and the solid was air-dried.

### Example 10: Preparation of Catalyst 10

In a 4-in polymerization tube, 0.23 g of Davison SMR-37-1534 SRA alumina which had been calcined 2 h at 900°C in air was evacuated and 2.0 mL freshly prepared Fe₂O₃ sol (prepared as in Example 7) was added. The tube was vented and the solid filtered out on an M-glass fritted filter. The cake was air-dried.

### Fibril Synthesis Runs

### Examples 11-33

Examples 11-33 describe fibril synthesis runs. Table 1 summarizes experimental conditions and results. Unless otherwise stated, the fibril precursor was benzene as an approximately 9:1 hydrogen:benzene mixture, and gas flow rates were 300 mL/min for H₂ and Ar; 300 mL/min CO and 100 mL/min H₂ for CO/H₂; 300 mL/min Ar or H₂ through benzene at 20°C for Ar/C₆H₆ or H₂/C₆H₆ (approximately 9:1 volume ratio Ar or H₂/C₆H₆). Air and hydrogen were always separated by a brief argon purge of the reactor. Experimental protocols were similar in each run, and are described in detail for Examples 11, 15 and 28.

### a) Example 11

Catalyst prepared according to the method of Example 1 was ultrasonically dispersed in water and transferred to a ceramic boat. The boat was placed in the center of a 2.54 cm (1") Vycor® tube in an electric furnace at room temperature. The catalyst was brought from room temperature to 500°C over a 15 minute period under a flow of argon. At this temperature, the gas mixture was changed to a hydrogen: benzene (9:1) mixture. This composition was fed into the reactor for 60 minutes.

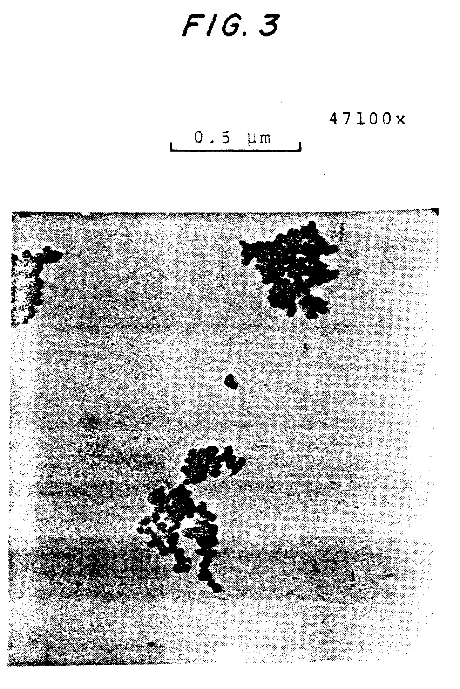

The hydrocarbon flow was terminated and replaced by argon, and the reactor cooled to room temperature. The boat was removed from the tube and a quantity of carbon was scraped from it. This carbon was ultrasonically dispersed in ethanol and a 10 microliter sample was examined by electron microscopy. The micrographs revealed that most of the iron particles were encapsulated in 5 to 15 nm (50 to 150 angstrom) carbon sheaths (Figure 3).

### b) Example 15

Catalyst prepared as in Example 2 was dispersed in a ceramic boat. The boat was placed in a 1" Vycor® tube in the same electric furnace as used in Example 11.

The furnace temperature was raised from room temperature to 500°C and for 60 minutes under air. The reactor was briefly purged with argon. The temperature was then raised from 500°C to 900°C over a 15 minute period under hydrogen and maintained at 900°C for 60 minutes under that hydrogen flow.

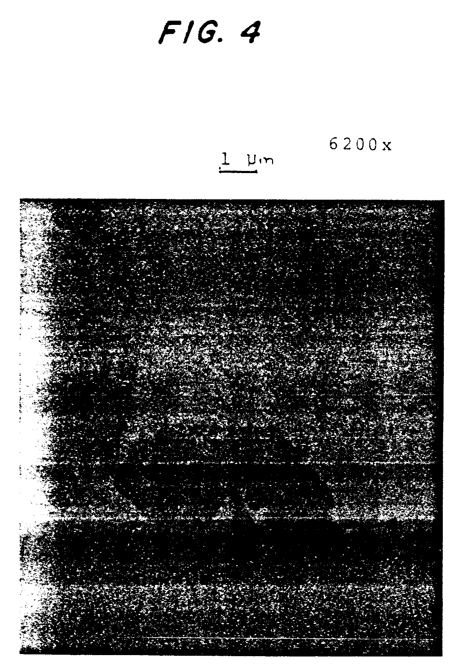

Gas flow was then switched to benzene-saturated hydrogen for 180 minutes at 900°C. After cooling to room temperature under argon a sample was prepared according to the procedure of Example 11, and examined by electron microscopy. Electron micrographs revealed numerous 10-45 nm (100-450 angstrom) diameter fibrils (Figure 4).

### c) Example 28

Catalyst prepared as in Example 3 was dispersed in a ceramic boat. The boat was placed in a 2.54 cm (1") mullite tube in the same electric furnace as used in Example 11.

The furnace temperature was raised from room temperature to 500°C over 15 minutes and maintained at 500°C for 60 minutes under air. The reactor was briefly purged with argon. The temperature was then raised from 500°C to 900°C over a 20 minute period under hydrogen and maintained at 900°C for 60 minutes under that hydrogen flow. The temperature was then raised still further to 1100°C over a 20 minute period maintaining the same hydrogen flow.

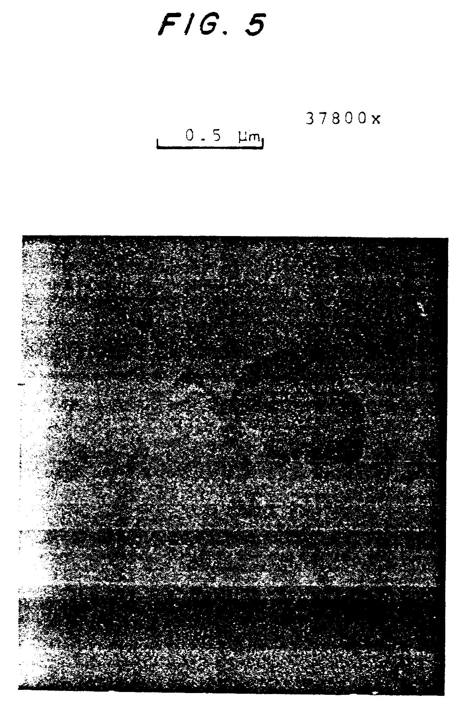

Gas flow was then switched to benzene saturated hydrogen for 5 minutes at 1100°C. After cooling to room temperature under argon a sample was prepared according to the procedure of Example 11, and examined by electron microscopy. Electron micrographs revealed fibrils ranging in diameter from 3 to 30 nm (30 to 300 angstroms) (Figure 5).

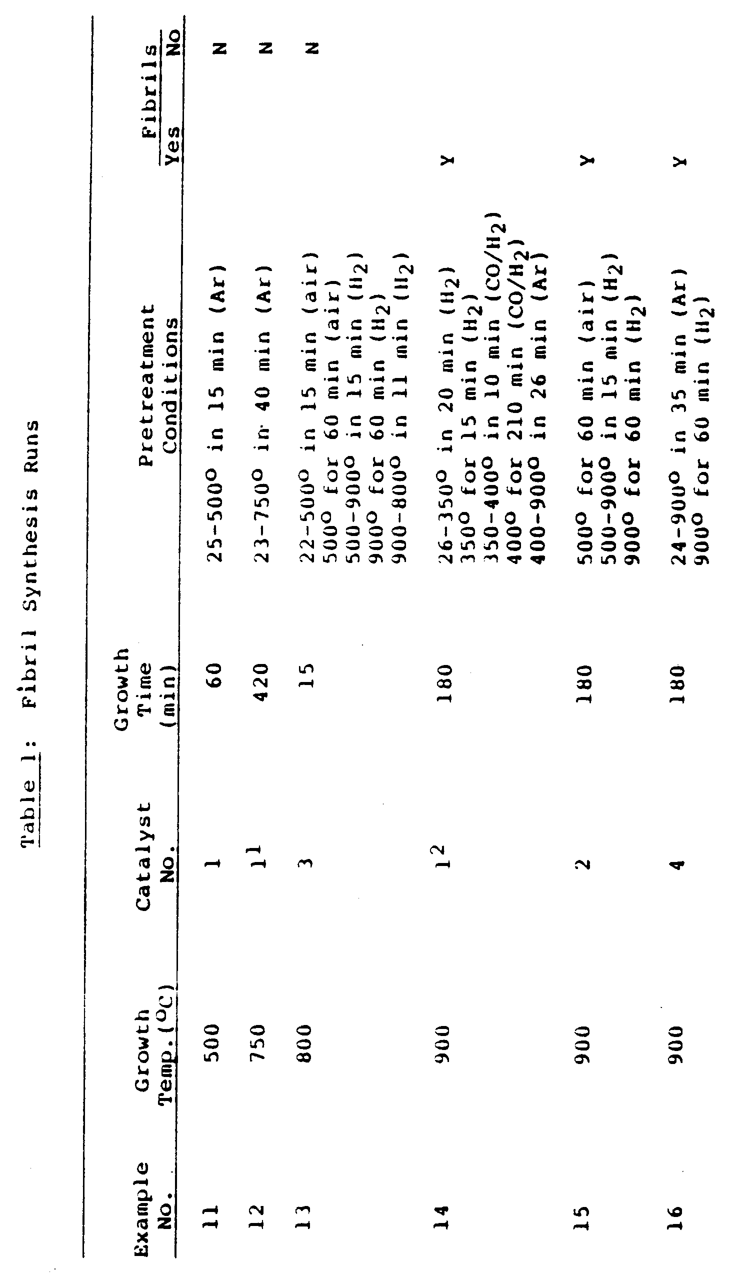

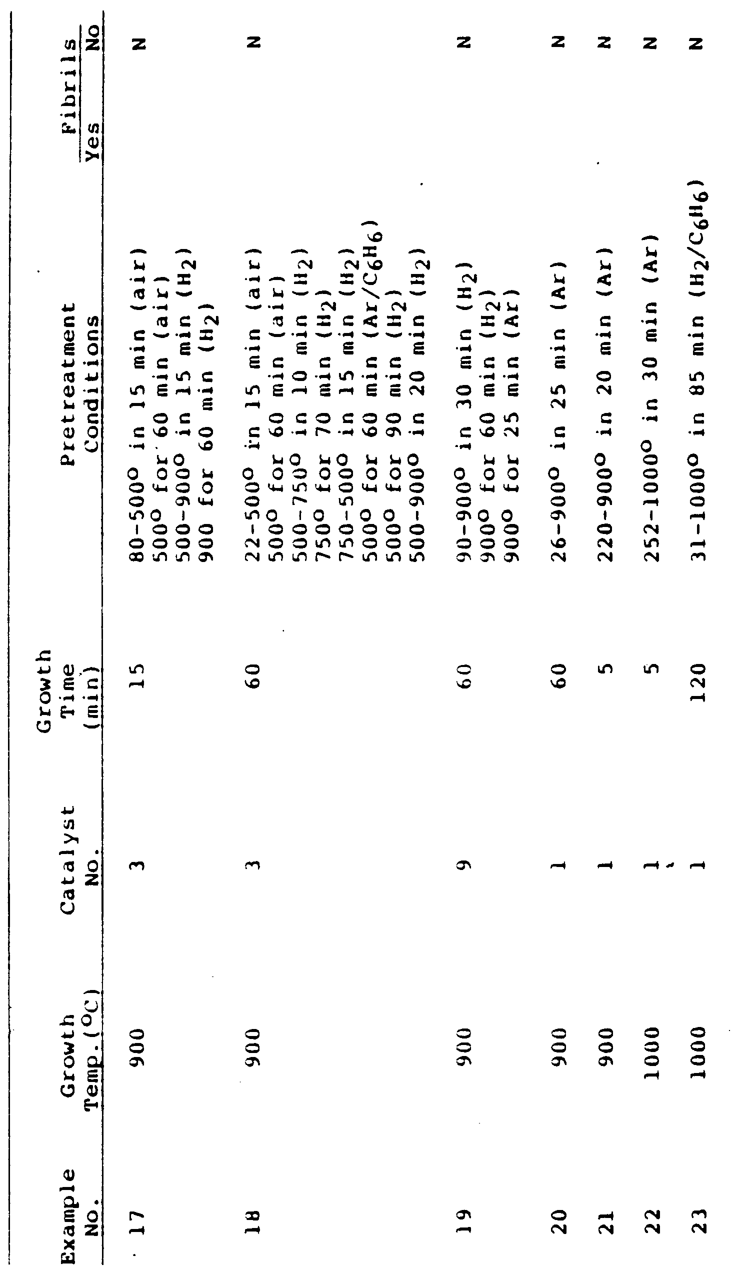

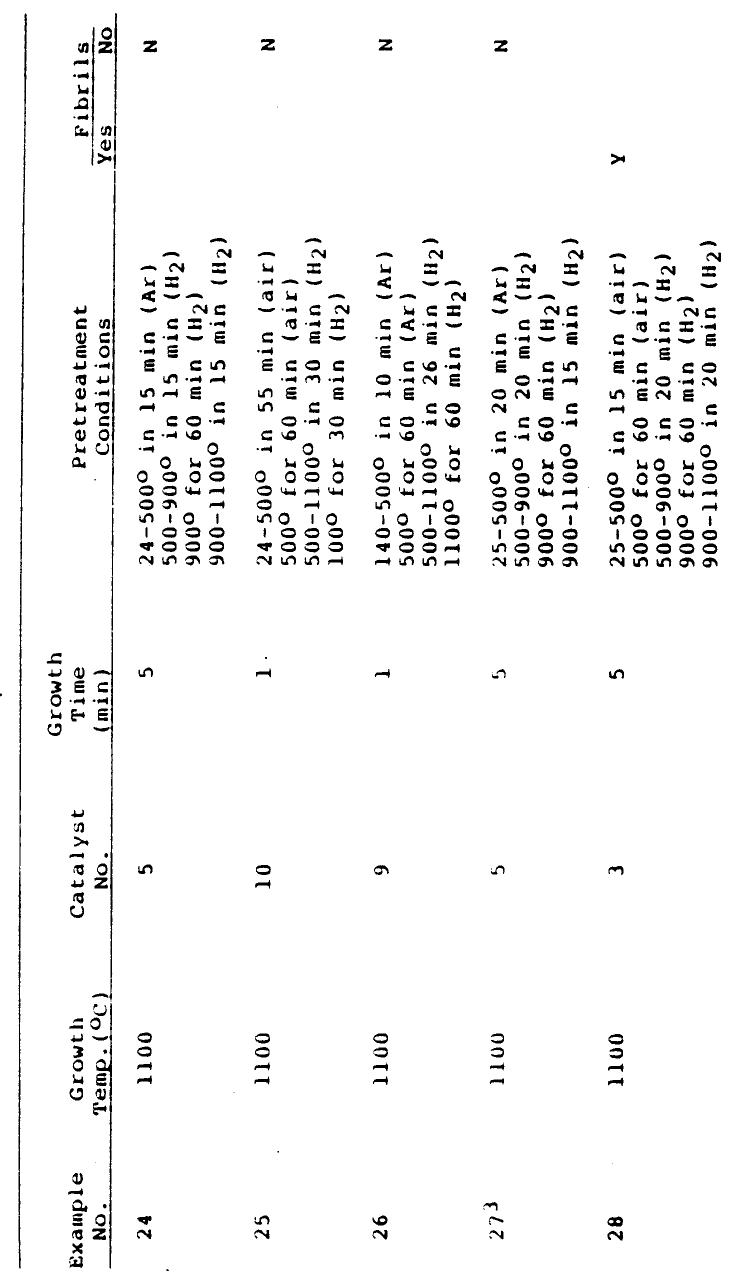

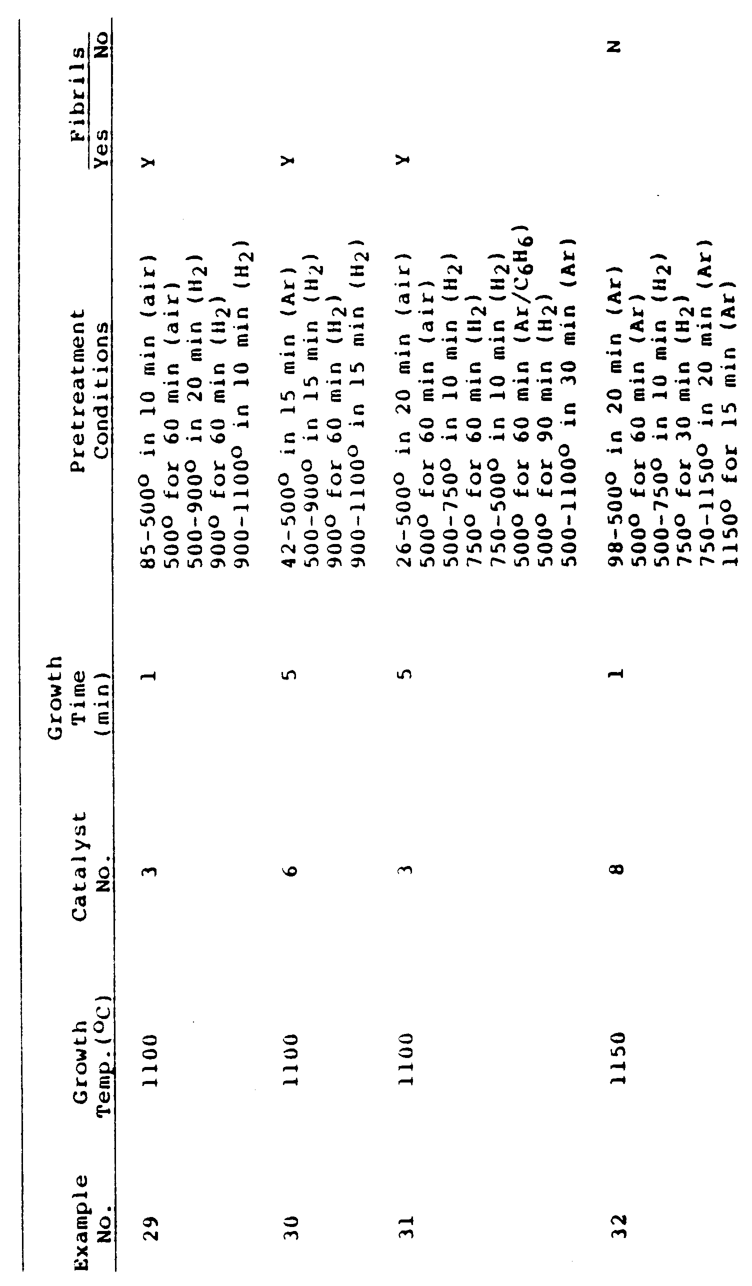

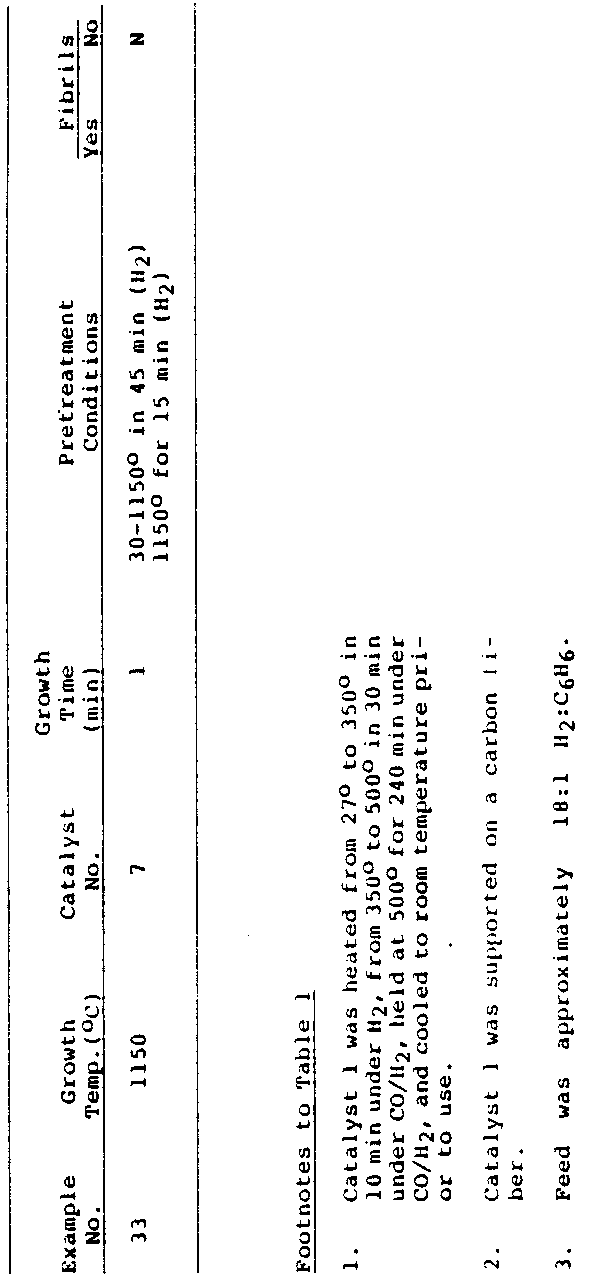

### Example 34: Production of Encapsulated Iron Catalyst

A ceramic combustion boat was coated with 20 mg iron oxalate crystals and treated at 400°C for one hour with a 9:1 volume ratio Ar:C₂H₂. A uniform dispersion of metallic iron particles or iron-containing particles in a carbon-containing polymer was obtained.

### Example 35: Production of Iron Oxide Particles

The uniform dispersion of iron-containing particles prepared in example 34 was heated slowly to avoid large temperature rises and particle fusion in flowing air for 2 hours at 350°C. The carbon-containing compound was burnt off and a powder of 3 to 10 nm (30 to 100 angstroms) iron oxide was obtained.

### Example 36: Production of Iron Particles

The iron oxide particles prepared in example 35 may be reduced with H₂ to produce iron particles in the 3 to 10 nm (30 to 100 angstroms) size range.

### Example 37: Production of Fibrils using Iron Oxide Catalyst

The iron oxide particles prepared in Example 35 may be heated to 1100°C in flowing argon and treated for 15 minutes at 1100°C with pure CO. The CO flow is then terminated and replaced by Ar to cool the reactor to room temperature. A quantity of carbon may be scraped from the ceramic boat and ultrasonically dispersed in ethanol and examined by electron microscopy. Carbon fibrils in the range of 3 to 10 nm (30 to 100 angstroms) are obtained.

### Example 38: Dispersion of Catalyst on Fibrils

Carton fibrils prepared according to Example 37 may be scraped onto a sintered glass filter funnel and wetted with a freshly prepared 2% solution off starch. While still wet, the fibrils are treated with a 0.81 M Fe(NO₃)₃ solution. Excess liquid is poured off and the fibrils dried in air overnight at room temperature.

### Example 39: Production of Branched Fibrils

A small quantity of the fibrils prepared in example 38 may be scraped into a ceramic boat and placed in a 1" alumina tube in an electric furnace. Argon is passed through the tube as the temperature is increased to 1100°C. Carbon monoxide is introduced for 15 minutes. The CO flow is terminated and replaced by argon while cooling the reactor.

A quantity of carbon may be scraped from the ceramic boat and ultrasonically dispersed in ethanol. A sample may be examined by electron microscopy to observe new carbon fibrils with diameters ranging from 5 to 30 nm (50 to 300 angstroms).

### Example 40: Continuous Production of Carton Fibrils with Recycle of Precursor

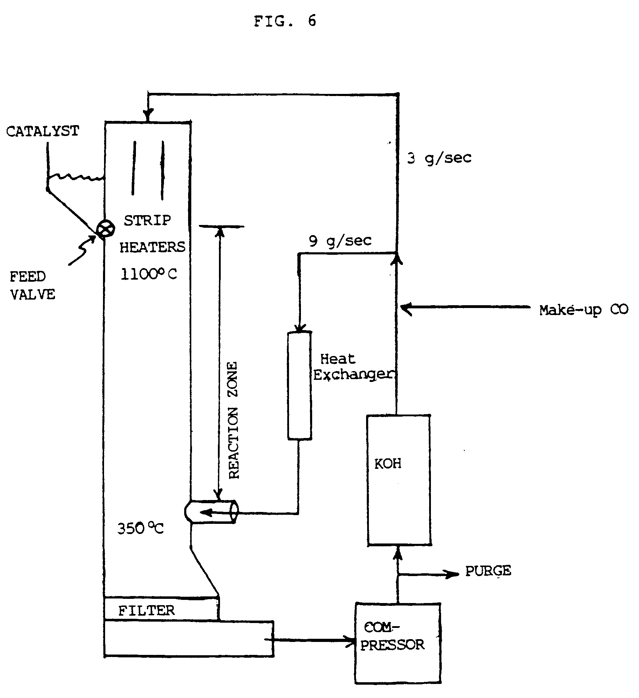

A stream consisting of recycle and make-up CO may be fed into a flow tower reactor along with catalyst as prepared in example 38. The flow tower is brick lined and approximately 0.30 meters in diameter and 20 meters in overall height (Figure 6).

The mixed recycle and make-up CO stream enters the tower at the top and flows down through ceramic strip heaters which bring its temperature to 1100°C. The catalyst is fed by a star feeder into the CO stream.

Gas flow through the reaction zone is 0.16 m/sec and the zone is approximately 10 meters long. The reaction may be terminated by the injection of cold (100°C) gas. Product fibrils are collected on a porous ceramic filter and the effluent gas is recompressed to about 1.3 atmospheres. A small purge is taken from the effluent gas to balance unknown impurities formed in the reactor and contained in the feed CO. The stream passes through a KOH Bed (0.5 m in diameter x 2 m long) before the make-up CO is added. The stream then is divided; 9 g/second being diverted through a heat exchanger and the remaining 3 g/second returns to the reaction tower.

After 3 hours, the system is shut down and cooled and the ceramic filter is removed. The carbon fibrils are obtained matted to the filter. The fibrils may be scraped from the filter and used to form a composite.

### Example 41: Composite Preparation

An epoxy resin system having 100 parts by weight DGEBA, 36 parts by weight DDS curing agent and 0.5 parts by weight BF₃ MEA accelerator may be used to wet the mat prepared in example 40 and the resulting mass dried overnight at room temperature. Ten one-inch squares are cut from the dried mat and placed in a heated die. A composite is formed by hot-pressing for 3 hours at 100°C. The composite is removed from the disc and aired for 24 hours at 120°C and 4 hours at 175°C.

## Claims (Claims for the following Contracting State(s): BE, CH, DE, FR, GB, IT, LI, LU, NL, SE)

1. One or a plurality of cylindrical discrete carbon fibrils, characterized by a constant diameter, a length greater than 5 times the diameter and less than 100 times the diameter, an ordered outer region of catalytically grown multiple continuous layers of ordered carbon atoms having an outside diameter between 3.5 and 70 nm, said ordered carbon atoms being graphitic domains whose c-axes are perpendicular to the cylindrical axis of the fibril and a distinct inner core region, each of the layers and the core being disposed concentrically about the cylindrical axis of the fibril, wherein said fibril is free of pyrolytically deposited thermal carbon.

2. The fibril of claim 1, wherein the core is hollow.

3. The fibril of claim 1, wherein the inner core region comprises carbon atoms which are less ordered than the ordered carbon atoms of the outer region.

4. The fibril according to one of the preceeding claims, wherein the length is greater than 20 times the diameter.

5. The fibril according to one of the preceeding claims, wherein the diameter is between 7 and 25 nm.

6. The fibril according to one of the preceeding claims, wherein the inner core region has a diameter greater than 2 nm.

7. A method for continuously producing the carbon fibrils of claims 1 to 6, which comprises continuously contacting metal containing particles with a gaseous carbon-containing compound at a temperature between 800°C and 1.200°C, below the thermal decomposition temperature of said carbon-containing compound, to avoid formation of pyrolytic carbon on the catalytically grown outer region of said fibrils, and recovering the fibrils so obtained.

8. A method of claim 7 wherein the continuous contacting is effected by continuously introducing the gaseous carbon-containing compound into a reaction zone containing the metal-containing particle and continuously withdrawing the gaseous carbon-containing compound from the reaction zone.

9. A method of claim 7, wherein the continuous contacting is effected by continuously introducing the metal-containing particles into a reaction zone containing a defined volume of the gaseous, carbon-containing compound and continuously withdrawing the metal-containing particles from the reaction zone.

10. A method of claim 7, wherein the continuous contacting is effected by continuously introducing the metal-containing particles and the gaseous, carbon-containing compound into a reaction zone and continuously withdrawing the metal-containing particles and the gaseous carbon-containing compound from the reaction zone.

11. A method of claim 8, wherein the withdrawn gaseous carbon-containing compound is treated so as to remove any undesirable material and is then continuously reintroduced into the reaction zone.

12. A method of claim 11, wherein the gaseous carbon-containing compound is carbon monoxide and the treatment comprises removing carbon dioxide from the carbon monoxide withdrawn from the reaction zone.

13. A method of claim 9, wherein the withdrawn metal-containing particles are treated so as to remove any undesirable material and recover carbon fibrils and the particles so treated are then continuously reintroduced into the reaction zone.

14. A method of claim 7, wherein the carbon fibrils are recovered in association with the metal-containing particles.

15. A method of claim 14, wherein the carbon fibrils in association with the particles are continuously recovered.

16. A method of claim 15, wherein a portion of the carbon fibrils in association with the particles so recovered are treated with additional metal-containing particles and the fibrils so treated are continuously reintroduced into contact with the gaseous carbon-containing compound.

17. A method according to claim 7, wherein the contacting of the metal-containing particle with the carbon-containing compound is carried out in the presence of a compound capable of reaction with carbon to produce gaseous products.

18. A method according to claim 17, wherein the compound capable of reacting with carbon is CO₂, H₂ or H₂O.

19. A method according to claim 7, wherein the carbon-containing compound is carbon monoxide.

20. The method of claims 7 to 19, wherein the carbon-containing compound is carbon monoxide, an aromatic hydrocarbon, a non-aromatic hydrocarbon, or an oxygen-containing hydrocarbon.

21. The method of claims 7 to 20, wherein the carbon-containing compound is formaldehyde, acetaldehyde, acetone, methanol, ethanol, or a mixture thereof, benzene, toluene, xylene, cumene, ethylbenzene, naphthalene, phenanthrene, anthracene or mixtures thereof, or methane, ethane, propane, ethylene, propylene, acetylene or mixtures thereof.

22. The method of claims 7 to 21, wherein the metal-containing particle comprises an iron-, cobalt- or nickel-containing particle having a diameter between 3.5 and 70 nm.

23. The method according to one of claims 7 to 22, wherein the metal-containing particles are derived from metal salts which decompose below the thermal decomposition temperature of the carbon-containing gas.

24. The method of claim 23, wherein the metal salt is iron oxalate.

25. The method of one of claims 7 to 24, wherein the metal-containing particles are encapsulated in carbon or a carbon-containing compound.

26. The method of claim 25, wherein the carbon-containing compound is an organic polymer.

27. The method of claim 26, wherein the organic polymer is polystyrene or starch.

28. The method of claims 7 to 27, wherein the metal particles are contacted with the carbon-containing gas for a period of time from 10 seconds to 30 minutes at a pressure from 10.13 kPa (one tenth atmospheres) to 1013 kPa (ten atmospheres), whereby the metal-containing particles is an iron-containing particle, the gaseous carbon-containing compound is carbon-monoxide and the temperature is from 900 to 1150°C.

29. The method of claim 28, wherein the period of time is 10 minutes, the pressure is 101.3 kPa (one atmosphere), the carbon-containing compound is carbon monoxide and the temperature is 1000°C.

30. The method of claim 28, wherein the period of time is from one to five minutes, the pressure is 101.3 kPa (one atmosphere), the carbon-containing compound is carbon monoxide and the temperature is 1100°C.

31. The method of claims 7 to 30, wherein the metal-containing particle is supported on a chemically compatible, refractory support.

32. The method of claim 31, wherein the refractory support is alumina, carbon, carbon fiber, carbon fibril, carbon plate, a silicate or aluminum silicate.

33. The method of claims 7 to 32, wherein the metal-containing particles are independently heated to a temperature between 850 and 1,800°C, whereby the temperature of the particles is higher than the temperature of the gaseous carbon-containing compound.

34. The method of claim 33, wherein the particles are heated with electromagnetic radiation.

35. A composite comprising a plurality of carbon fibrils according to one of claims 1 to 6 in a matrix.

36. The composite of claim 35, wherein the matrix comprises an organic polymer, an inorganic polymer, or a metal.

37. The composite of claims 35 and 36, wherein the carbon fibrils are dispersed in the matrix.

38. The composite of claims 35 to 37, wherein the matrix is an adhesive or a ceramic material.

39. The composite of claims 35 to 38, wherein the dispersed fibrils are oriented within the matrix.

40. A composition of matter comprising a metal-containing particle supported on a fibril according to claims 1 to 6.

41. A fibril mat comprising a plurality of carbon fibrils of claims 1 to 6.

42. A composite comprising a fibril mat of claim 41 and a matrix.

43. A furry fiber comprising a carbon fiber and a plurality of carbon fibrils according to claims 1 to 6 adhering to the outer surface of said carbon fiber.

44. A furry plate comprising a carbon plate and a plurality of carbon fibrils according to claims 1 to 6 adhering to the outer surface of the plate.

45. A composition of matter which comprises a first carbon fibril according to one of claims 1 to 6 and a plurality of fibrils according to one of claims 1 to 6 adhering to the outer surface of the first fibril.

46. A method of preparing a composite of claim 42, which comprises impregnating a fibril mat with a matrix.

47. A method of preparing a furry fiber of claim 43, which comprises dispersing a plurality of metal-containing particles on the outer surface of a carbon fiber and contacting said carbon fiber with a gaseous carbon-containing compound at a temperature below the thermal decomposition temperature of the carbon-containing compound so as to produce carbon fibrils according to claims 1 to 6 which adhere to the outer surface of the fiber.

48. A method of preparing the furry plate of claim 44 which comprises dispersing a plurality of metal-containing particles on the outer surface of a carbon plate and contacting the plate with a gaseous, carbon-containing compound at a temperature below the thermal decomposition temperature of the carbon-containing compound so as to produce carbon fibrils according to claims 1 to 6 which adhere to the outer surface of the plate.

49. Use of carbon fibrils according to one of claims 1 to 6 or a fibril mat, furry fiber or furry plate of claims 41, 43 and 44 for reinforcing a structural material, enhancing the electrical conductivity and/or the thermal conductivity of a material, increasing the surface area of an electrode or an electrolytic capacitor plate, supporting a catalyst and/or shielding an object from electromagnetic radiation.

## Claims (Claims for the following Contracting State(s): AT)

1. A method for continuously producing one or a plurality of cylindrical discrete carbon fibrils having a constant diameter, a length greater than 5 times the diameter and less than 100 times the diameter, an ordered outer region of catalytically grown multiple continuous layers of ordered carbon atoms having an outside diameter between 3.5 and 70 nm, said ordered carbon atoms being graphitic domains whose c-axes are perpendicular to the cylindrical axis of the fibril and a distinct inner core region, each of the layers and the core being disposed concentrically about the cylindrical axis of the fibril, wherein said fibril is free of pyrolytically deposited thermal carbon, which method comprises continuously contacting metal containing particles with a gaseous carbon-containing compound at a temperature between 800°C and 1.200°C, below the thermal decomposition temperature of said carbon-containing compound, to avoid formation of pyrolytic carbon on the catalytically grown outer region of said fibrils, and recovering the fibrils so obtained.

2. The method of claim 1, wherein the core is hollow.

3. The method of claim 1, wherein the inner core region comprises carbon atoms which are less ordered than the ordered carbon atoms of the outer region.

4. The method according to one of the preceeding claims, wherein the length is greater than 20 times the diameter.

5. The method according to one of the preceeding claims, wherein the diameter is between 7 and 25 nm.

6. The method according to one of the preceeding claims, wherein the inner core region has a diameter greater than 2 nm.

7. A method of claim 1 wherein the continuous contacting is effected by continuously introducing the gaseous carbon-containing compound into a reaction zone containing the metal-containing particle and continuously withdrawing the gaseous carbon-containing compound from the reaction zone.

8. A method of claim 1, wherein the continuous contacting is effected by continuously introducing the metal-containing particles into a reaction zone containing a defined volume of the gaseous, carbon-containing compound and continuously withdrawing the metal-containing particles from the reaction zone.

9. A method of claim 1, wherein the continuous contacting is effected by continuously introducing the metal-containing particles and the gaseous, carbon-containing compound into a reaction zone and continuously withdrawing the metal-containing particles and the gaseous carbon-containing compound from the reaction zone.

10. A method of claim 7, wherein the withdrawn gaseous carbon-containing compound is treated so as to remove any undesirable material and is then continuously reintroduced into the reaction zone.

11. A method of claim 10, wherein the gaseous carbon-containing compound is carbon monoxide and the treatment comprises removing carbon dioxide from the carbon monoxide withdrawn from the reaction zone.

12. A method of claim 8, wherein the withdrawn metal-containing particles are treated so as to remove any undesirable material and recover carbon fibrils and the particles so treated are then continuously reintroduced into the reaction zone.

13. A method of claims 1, wherein the carbon fibrils are recovered in association with the metal-containing particles.

14. A method of claim 13, wherein the carbon fibrils in association with the particles are continuously recovered.

15. A method of claim 14, wherein a portion of the carbon fibrils in association with the particles so recovered are treated with additional metal-containing particles and the fibrils so treated are continuously reintroduced into contact with the gaseous carbon-containing compound.

16. A method according to claim 1, wherein the contacting of the metal-containing particle with the carbon-containing compound is carried out in the presence of a compound capable of reaction with carbon to produce gaseous products.

17. A method according to claim 16, wherein the compound capable of reacting with carbon is CO₂, H₂ or H₂O.

18. A method according to claim 1, wherein the carbon-containing compound is carbon monoxide.

19. The method of claims 1 to 18, wherein the carbon-containing compound is carbon monoxide, an aromatic hydrocarbon, a non-aromatic hydrocarbon, or an oxygen-containing hydrocarbon.

20. The method of claims 1 to 19, wherein the carbon-containing compound is formaldehyde, acetaldehyde, acetone, methanol, ethanol, or a mixture thereof, benzene, toluene, xylene, cumene, ethylbenzene, naphthalene, phenanthrene, anthracene or mixtures thereof, or methane, ethane, propane, ethylene, propylene, acetylene or mixtures thereof.

21. The method of claims 1 to 20, wherein the metal-containing particle comprises an iron-, cobalt- or nickel-containing particle having a diameter between 3.5 and 70 nm.

22. The method according to one of claims 1 to 21, wherein the metal-containing particles are derived from metal salts which decompose below the thermal decomposition temperature of the carbon-containing gas.

23. The method of claim 22, wherein the metal salt is iron oxalate.

24. The method of one of claims 1 to 23, wherein the metal-containing particles are encapsulated in carbon or a carbon-containing compound.

25. The method of claim 24, wherein the carbon-containing compound is an organic polymer.

26. The method of claim 25, wherein the organic polymer is polystyrene or starch.

27. The method of claims 1 to 26, wherein the metal particles are contacted with the carbon-containing gas for a period of time from 10 seconds to 30 minutes at a pressure from 10.13 kPa (one tenth atmospheres) to 1013 kPa (ten atmospheres), whereby the metal-containing particles is an iron-containing particle, the gaseous carbon-containing compound is carbon-monoxide and the temperature is from 900 to 1150°C.

28. The method of claim 27, wherein the period of time is 10 minutes, the pressure is 101.3 kPa (one atmosphere), the carbon-containing compound is carbon monoxide and the temperature is 1000°C.

29. The method of claim 27, wherein the period of time is from one to five minutes, the pressure is 101.3 kPa (one atmosphere), the carbon-containing compound is carbon monoxide and the temperature is 1100°C.

30. The method of claims 1 to 29, wherein the metal-containing particle is supported on a chemically compatible, refractory support.

31. The method of claim 30, wherein the refractory support is alumina, carbon, carbon fiber, carbon fibril, carbon plate, a silicate or aluminum silicate.

32. The method of claims 1 to 31, wherein the metal-containing particles are independently heated to a temperature between 850 and 1,800°C, whereby the temperature of the particles is higher than the temperature of the gaseous carbon-containing compound.

33. The method of claim 32, wherein the particles are heated with electromagnetic radiation.

34. A method for preparing a composite by dispersing, embedding or injecting a plurality of carbon fibrils prepared according to one of claims 1 to 6 in a matrix or into a matrix, respectively.

35. The method of claim 34, wherein the matrix comprises an organic polymer, an inorganic polymer, or a metal.

36. The method of claims 34 and 35, wherein the carbon fibrils are dispersed in the matrix.

37. A method according to claim 1, wherein growing of the fibrils is performed in a porous ceramic matrix comprising catalyst particles dispersed therein, by passing a gaseous, carbon containing compound through the porous ceramic matrix.

38. The method of claims 34 to 36, wherein the matrix is an adhesive or a ceramic material.

39. The method of claims 34 to 36, and 38, wherein the dispersed fibrils are oriented within the matrix.

40. A method according to claim 1, wherein the metal-containing particles are supported on a carbon fibril.

41. A method for preparing a fibril mat by collecting or recovering carbon fibrils prepared according to claims 1 to 6 on a support plate or filter, or by entangling the fibrils.

42. A method for preparing a composite by dispersing, impregnating or injecting a fibril mat prepared according to claim 41 with a matrix.

43. A method for preparing a composition of matter wherein a first carbon fibril prepared according to one of claims 1 to 6 and a plurality of fibrils prepared according to one of claims 1 to 6 is adhered to the outer surface of the first fibril.

44. A method of claim 42, which comprises impregnating a fibril mat with a matrix.

45. A method of preparing a furry fiber which comprises dispersing a plurality of metal-containing particles on the outer surface of a carbon fiber and continously contacting said carbon fiber with a gaseous, carbon-containing compound at a temperature between 800°C and 1200°C, below the thermal decomposition temperature of the cabon-containing compound so as to produce carbon fibrils according to the method of claims 1 to 6 which adhere to the outer surface of the fiber.

46. A method of preparing a furry plate, which comprises dispersing a plurality of metal-containing particles on the outer surface of a carbon plate and continously contacting the plate with a gaseous, carbon-containing compound at a temperature between 800°C and 1200°C, below the thermal decomposition temperature of the carbon-containing compound so as to produce carbon fibrils according to the method of claims 1 to 6 which adhere to the outer surface of the plate.

47. Use of carbon fibrils prepared according to one of claims 1 to 6 or a fibril mat, furry fiber or furry plate prepared according to claims 41, 45 and 46 for reinforcing a structural material, enhancing the electrical conductivity and/or the thermal conductivity of a material, increasing the surface area of an electrode or an electrolytic capacitor plate, supporting a catalyst and/or shielding an object from electromagnetic radiation.

## Patentansprüche (Patentansprüche für folgende(n) Vertragsstaat(en): BE, CH, DE, FR, GB, IT, LI, LU, NL, SE)

1. Eine oder eine Vielzahl von zylinderförmigen diskreten Kohlenstoffibrillen, gekennzeichnet durch einen konstanten Durchmesser, eine Länge, die um mehr als das Fünffache größer ist als der Durchmesser und weniger als das Hundertfache des Durchmessers beträgt, einen geordneten Außenbereich aus katalytisch gezüchteten kontinuierlichen Mehrfachschichten aus geordneten Kohlenstoffatomen mit einem Außendurchmesser zwischen 3,5 und 70 nm, wobei es sich bei den geordneten Kohlenstoffatomen um Graphitdomänen handelt, deren c-Achsen senkrecht zur zylindrischen Achse der Fibrille und einem getrennten inneren Kernbereich stehen, wobei jede der Schichten und der Kern konzentrisch um die zylindrische Achse der Fibrille angeordnet sind und die Fibrille frei von pyrolytisch abgeschiedenem Thermalruß ist.

2. Fibrille nach Anspruch 1, in der der Kern hohl ist.

3. Fibrille nach Anspruch 1, in der der innere Kernbereich Kohlenstoffatome umfaßt, die weniger geordnet als die geordneten Kohlenstoffatome des äußeren Bereichs sind.

4. Fibrille nach einem der vorstehenden Ansprüche, in der die Länge um das Zwanzigfache größer als der Durchmesser ist.

5. Fibrille nach einem der vorstehenden Ansprüche, in der der Durchmesser zwischen 7 und 25 nm beträgt.

6. Fibrille nach einem der vorstehenden Ansprüche, in der der innere Kernbereich einen Durchmesser von mehr als 2 nm aufweist.

7. Verfahren für die kontinuierliche Herstellung der Kohlenstoffibrillen nach Anspruch 1 bis 6, bei dem man metallhaltige Teilchen mit einer gasförmigen kohlenstoffhaltigen Verbindung bei einer Temperatur zwischen 800 und 1200°C, jedoch unterhalb der thermischen Zersetzungstemperatur der kohlenstoffhaltigen Verbindung, kontinuierlich in Kontakt bringt, um die Bildung von pyrolytischem Kohlenstoff auf dem katalytisch gezüchteten äußeren Bereich der Fibrille zu vermeiden, und die so erhaltenen Fibrillen gewinnt.

8. Verfahren nach Anspruch 7, bei dem der kontinuierliche Kontakt dadurch erfolgt, daß man die gasförmige kohlenstoffhaltige Verbindung kontinuierlich in eine das metallhaltige Teilchen enthaltende Reaktionszone einleitet und die gasförmige kohlenstoffhaltige Verbindung kontinuierlich aus der Reaktionszone abzieht.

9. Verfahren nach Anspruch 7, bei dem der kontinuierliche Kontakt dadurch erfolgt, daß man die metallhaltigen Teilchen kontinuierlich in eine Reaktionszone einleitet, die ein definiertes Volumen der gasförmigen kohlenstoffhaltigen Verbindung enthält, und die metallhaltigen Teilchen kontinuierlich aus der Reaktionszone abzieht.

10. Verfahren nach Anspruch 7, bei dem der kontinuierliche Kontakt dadurch erfolgt, daß man die metallhaltigen Teilchen und die gasförmige kohlenstoffhaltige Verbindung kontinuierlich in eine Reaktionszone einleitet und die metallhaltigen Teilchen und die gasförmige kohlenstoffhaltige Verbindung kontinuierlich aus der Reaktionszone abzieht.

11. Verfahren nach Anspruch 8, bei dem man die abgezogene gasförmige kohlenstoffhaltige Verbindung behandelt, um unerwünschte Substanzen zu entfernen, und sie dann kontinuierlich wieder in die Reaktionszone einleitet.

12. Verfahren nach Anspruch 11, bei dem die gasförmige kohlenstoffhaltige Verbindung Kohlenmonoxid ist und bei der Behandlung Kohlendioxid aus dem aus der Reaktionszone abgezogenen Kohlenmonoxid entfernt wird.

13. Verfahren nach Anspruch 9, bei dem man die abgezogenen metallhaltigen Teilchen behandelt, um unerwünschte Substanzen zu entfernen und Kohlenstofffibrillen zu gewinnen, und die so behandelten Teilchen dann kontinuierlich wieder in die Reaktionszone einleitet.

14. Verfahren nach Anspruch 7, bei dem die Kohlenstoffibrillen zusammen mit den metallhaltigen Teilchen gewonnen werden.

15. Verfahren nach Anspruch 14, bei dem die Kohlenstoffibrillen zusammen mit den Teilchen kontinuierlich gewonnen werden.

16. Verfahren nach Anspruch 15, bei dem ein Teil der so zusammen mit den Teilchen gewonnenen Kohlenstofffibrillen mit weiteren metallhaltigen Teilchen behandelt wird und die so behandelten Fibrillen kontinuierlich wieder eingeleitet werden, um in Kontakt mit der gasförmigen kohlenstoffhaltigen Verbindung zu treten.

17. Verfahren nach Anspruch 7, bei dem der Kontakt der metallhaltigen Teilchen mit der kohlenstoffhaltigen Verbindung in Gegenwart einer Verbindung erfolgt, die mit Kohlenstoff reagieren kann, um gasförmige Produkte zu erzeugen.

18. Verfahren nach Anspruch 17, bei dem die zur Reaktion mit Kohlenstoff fähige Verbindung CO₂, H₂ oder H₂O ist.

19. Verfahren nach Anspruch 7, bei dem die kohlenstoffhaltige Verbindung Kohlenmonoxid ist.

20. Verfahren nach Anspruch 7 bis 19, bei dem die kohlenstoffhaltige Verbindung Kohlenmonoxid, ein aromatischer Kohlenwasserstoff, ein nichtaromatischer Kohlenwasserstoff oder ein sauerstoffhaltiger Kohlenwasserstoff ist.

21. Verfahren nach Anspruch 7 bis 20, bei dem die kohlenstoffhaltige Verbindung Formaldehyd, Acetaldehyd, Aceton, Methanol, Ethanol oder eine Mischung davon, Benzol, Toluol, Xylol, Cumol, Ethylbenzol, Naphtalin, Phenanthren, Anthracen oder eine Mischung davon bzw. Methan, Ethan, Propan, Ethylen, Propylen, Acetylen oder eine Mischung davon ist.

22. Verfahren nach Anspruch 7 bis 21, bei dem die metallhaltigen Teilchen ein eisen-, cobalt- oder nickelhaltiges Teilchen mit einem Durchmesser zwischen 3,5 und 70 nm enthalten.

23. Verfahren nach einem der Ansprüche 7 bis 22, bei dem die metallhaltigen Teilchen von Metallsalzen abgeleitet sind, die sich unterhalb der thermischen Zersetzungstemperatur des kohlenstoffhaltigen Gases zersetzen.

24. Verfahren nach Anspruch 23, bei dem das Metallsalz Eisenoxalat ist.

25. Verfahren nach einem der Ansprüche 7 bis 24, bei dem die metallhaltigen Teilchen in Kohlenstoff oder einer kohlenstoffhaltigen Verbindung eingekapselt sind.

26. Verfahren nach Anspruch 25, bei dem die kohlenstoffhaltige Verbindung ein organisches Polymer ist.

27. Verfahren nach Anspruch 26, bei dem das organische Polymer Polystyrol oder Stärke ist.

28. Verfahren nach Anspruch 7 bis 27, bei dem die Metallteilchen mit dem kohlenstoffhaltigen Gas für einen Zeitraum von 10 Sekunden bis 30 Minuten bei einem Druck von 10,13 kPa (1/10 Atmosphären) bis 1013 kPa (10 Atmosphären) in Kontakt gebracht werden, wobei die metallhaltigen Teilchen eisenhaltige Teilchen sind, die gasförmige kohlenstoffhaltige Verbindung Kohlenmonoxid ist und die Temperatur 900 bis 1150°C beträgt.

29. Verfahren nach Anspruch 28, bei dem der Zeitraum 10 Minuten und der Druck 101,3 kPa (1 Atmosphäre) beträgt, die kohlenstoffhaltige Verbindung Kohlenmonoxid ist und die Temperatur 1000°C beträgt.

30. Verfahren nach Anspruch 28, bei dem der Zeitraum 1 bis 5 Minuten und der Druck 101,3 kPa (1 Atmosphäre) beträgt, die kohlenstoffhaltige Verbindung Kohlenmonoxid ist und die Temperatur 1100°C beträgt.

31. Verfahren nach Anspruch 7 bis 30, bei dem die metallhaltigen Teilchen auf einer chemisch kompatiblen, feuerfesten Unterlage geträgert sind.

32. Verfahren nach Anspruch 31, bei dem die feuerfeste Unterlage Aluminiumoxid, Kohlenstoff, eine Kohlenstoffaser, eine Kohlenstoffibrille, eine Kohlenstoffplatte, ein Silicat oder Aluminiumsilicat ist.

33. Verfahren nach Anspruch 7 bis 32, bei dem die metallhaltigen Teilchen unabhängig auf eine Temperatur zwischen 850°C und 1.800°C erhitzt werden, wobei die Temperatur der Teilchen höher als die Temperatur der gasförmigen kohlenstoffhaltigen Verbindung ist.

34. Verfahren nach Anspruch 33, bei dem die Teilchen mit elektromagnetischer Strahlung erhitzt werden.

35. Verbundwerkstoff, der eine Vielzahl von Kohlenstoffibrillen nach einem der Ansprüche 1 bis 6 in einer Matrix enthält.

36. Verbundwerkstoff nach Anspruch 35, bei dem die Matrix ein organisches Polymer, ein anorganisches Polymer oder ein Metall enthält.

37. Verbundwerkstoff nach Anspruch 35 und 36, bei dem die Kohlenstoffibrillen in der Matrix dispergiert sind.

38. Verbundwerkstoff nach Anspruch 35 bis 37, bei dem die Matrix ein Klebstoff oder ein Keramikmaterial ist.

39. Verbundwerkstoff nach Anspruch 35 bis 38, bei dem die dispergierten Fibrillen innerhalb der Matrix orientiert sind.

40. Zusammensetzung aus Materie, die ein auf einer Fibrille nach Anspruch 1 bis 6 geträgertes metallhaltiges Teilchen enthält.

41. Fibrillenmatte, die ein Vielzahl von Kohlenstofffibrillen nach Anspruch 1 bis 6 enthält.

42. Verbundwerkstoff, der eine Fibrillenmatte nach Anspruch 41 und eine Matrix enthält.

43. Pelzartige Faser, die eine Kohlenstoffaser und eine Vielzahl von Kohlenstoffibrillen nach Anspruch 1 bis 6 umfaßt, die an der äußeren Oberfläche der Kohlenstoffaser haften.

44. Pelzartige Platte, die eine Kohlenstoffaser und eine Vielzahl von Kohlenstoffibrillen nach Anspruch 1 bis 6 umfaßt, die an der äußeren Oberfläche der Platte haften.

45. Zusammensetzung aus Materie, enthaltend eine erste Kohlenstoffibrille nach einem der Ansprüche 1 bis 6 und eine Vielzahl von Fibrillen nach einem der Ansprüche 1 bis 6, welche an der äußeren Oberfläche der ersten Fibrille haften.

46. Verfahren zur Herstellung eines Verbundwerkstoffs nach Anspruch 42, bei dem eine Fibrillenmatte mit einer Matrix imprägniert wird.

47. Verfahren zur Herstellung einer pelzartigen Faser nach Anspruch 43, bei dem eine Vielzahl metallhaltiger Teilchen auf der äußeren Oberfläche einer Kohlenstoffaser dispergiert werden und die Kohlenstoffaser bei einer Temperatur unterhalb der Wärmezersetzungstemperatur der kohlenstoffhaltigen Verbindung mit einer gasförmigen, kohlenstoffhaltigen Verbindung in Kontakt gebracht wird, um Kohlenstoffibrillen nach einem der Ansprüche 1 bis 6 herzustellen, die an der äußeren Oberfläche der Faser haften.

48. Verfahren zur Herstellung der pelzartigen Platte nach Anspruch 44, bei dem eine Vielzahl metallhaltiger Teilchen auf der äußeren Oberfläche einer Kohlenstoffplatte dispergiert wird und die Platte bei einer Temperatur unterhalb der Wärmezersetzungstemperatur der kohlenstoffhaltigen Verbindung mit einer gasförmigen, kohlenstoffhaltigen Verbindung in Kontakt gebracht wird, um Kohlenstofffibrillen nach einem der Ansprüche 1 bis 6 herzustellen, die an der äußeren Oberfläche der Platte haften.

49. Verwendung von Kohlenstoffibrillen nach einem der Ansprüche 1 bis 6 oder einer Fibrillenmatte, einer pelzartigen Faser oder einer pelzartigen Platte nach Anspruch 41, 43 und 44 zur Verstärkung eines Strukturmaterials, zur Verbesserung der elektrischen Leitfähigkeit und/oder der Wärmeleitfähigkeit eines Materials, Vergrößerung der Oberfläche einer Elektrode oder einer elektrolytischen Kondensatorplatte, als Unterlage für einen Katalysator und/oder zum Schutz eines Gegenstandes vor elektromagnetischer Strahlung.

## Patentansprüche (Patentansprüche für folgende(n) Vertragsstaat(en): AT)

1. Verfahren zur kontinuierlichen Herstellung einer oder einer Vielzahl von zylinderförmigen diskreten Kohlenstoffibrillen, gekennzeichnet durch einen konstanten Durchmesser, eine Länge, die um mehr als das Fünffache größer ist als der Durchmesser und weniger als das Hundertfache des Durchmessers beträgt, einen geordneten Außenbereich aus katalytisch gezüchteten kontinuierlichen Mehrfachschichten aus geordneten Kohlenstoffatomen mit einem Außendurchmesser zwischen 3,5 und 70 nm, wobei es sich bei den geordneten Kohlenstoffatomen um Graphitdomänen handelt, deren c-Achsen senkrecht zur zylindrischen Achse der Fibrille und einem getrennten inneren Kernbereich stehen, wobei jede der Schichten und der Kern konzentrisch um die zylindrische Achse der Fibrille angeordnet sind und die Fibrille frei von pyrolytisch abgeschiedenem Thermalruß ist, bei dem man metallhaltige Teilchen mit einer gasförmigen kohlenstoffhaltigen Verbindung bei einer Temperatur zwischen 800 und 1200°C, jedoch unterhalb der thermischen Zersetzungstemperatur der kohlenstoffhaltigen Verbindung, in Kontakt bringt, um die Bildung von pyrolytischem Kohlenstoff auf dem katalytisch gezüchteten äußeren Bereich der Fibrille zu vermeiden, und die so erhaltenen Fibrillen gewinnt.

2. Verfahren nach Anspruch 1, bei dem der Kern hohl ist.

3. Verfahren nach Anspruch 1, bei dem der innere Kernbereich Kohlenstoffatome umfaßt, die weniger geordnet als die geordneten Kohlenstoffatome des äußeren Bereichs sind.

4. Verfahren nach einem der vorstehenden Ansprüche, bei dem die Länge um das Zwanzigfache größer als der Durchmesser ist.

5. Verfahren nach einem der vorstehenden Ansprüche, bei dem der Durchmesser zwischen 7 und 25 nm beträgt.

6. Verfahren nach einem der vorstehenden Ansprüche, bei dem der innere Kernbereich einen Durchmesser von mehr als 2 nm aufweist.

7. Verfahren nach Anspruch 1, bei dem der kontinuierliche Kontakt dadurch erfolgt, daß man die gasförmige kohlenstoffhaltige Verbindung kontinuierlich in eine das metallhaltige Teilchen enthaltende Reaktionszone einleitet und die gasförmige kohlenstoffhaltige Verbindung kontinuierlich aus der Reaktionszone abzieht.

8. Verfahren nach Anspruch 1, bei dem der kontinuierliche Kontakt dadurch erfolgt, daß man die metallhaltigen Teilchen kontinuierlich in eine Reaktionszone einleitet, die ein definiertes Volumen der gasförmigen kohlenstoffhaltigen Verbindung enthält, und die metallhaltigen Teilchen kontinuierlich aus der Reaktionszone abzieht.

9. Verfahren nach Anspruch 1, bei dem der kontinuierliche Kontakt dadurch erfolgt, daß man die metallhaltigen Teilchen und die gasförmige kohlenstoffhaltige Verbindung kontinuierlich in eine Reaktionszone einleitet und die metallhaltigen Teilchen und die gasförmige kohlenstoffhaltige Verbindung kontinuierlich aus der Reaktionszone abzieht.

10. Verfahren nach Anspruch 7, bei dem man die abgezogene gasförmige kohlenstoffhaltige Verbindung behandelt, um unerwünschte Substanzen zu entfernen, und sie dann kontinuierlich wieder in die Reaktionszone einleitet.

11. Verfahren nach Anspruch 10, bei dem die gasförmige kohlenstoffhaltige Verbindung Kohlenmonoxid ist und bei der Behandlung Kohlendioxid aus dem aus der Reaktionszone abgezogenen Kohlenmonoxid entfernt wird.

12. Verfahren nach Anspruch 8, bei dem man die abgezogenen metallhaltigen Teilchen behandelt, um unerwünschte Substanzen zu entfernen und Kohlenstofffibrillen zu gewinnen, und die so behandelten Teilchen dann kontinuierlich wieder in die Reaktionszone einleitet.

13. Verfahren nach Anspruch 1, bei dem die Kohlenstoffibrillen zusammen mit den metallhaltigen Teilchen gewonnen werden.

14. Verfahren nach Anspruch 13, bei dem die Kohlenstoffibrillen zusammen mit den Teilchen kontinuierlich gewonnen werden.

15. Verfahren nach Anspruch 14, bei dem ein Teil der so zusammen mit den Teilchen gewonnenen Kohlenstofffibrillen mit weiteren metallhaltigen Teilchen behandelt wird und die so behandelten Fibrillen kontinuierlich wieder eingeleitet werden, um in Kontakt mit der gasförmigen kohlenstoffhaltigen Verbindung zu treten.

16. Verfahren nach Anspruch 1, bei dem der Kontakt der metallhaltigen Teilchen mit der kohlenstoffhaltigen Verbindung in Gegenwart einer Verbindung erfolgt, die mit Kohlenstoff reagieren kann, um gasförmige Produkte zu erzeugen.

17. Verfahren nach Anspruch 16, bei dem die zur Reaktion mit Kohlenstoff fähige Verbindung CO₂, H₂ oder H₂O ist.

18. Verfahren nach Anspruch 1, bei dem die kohlenstoffhaltige Verbindung Kohlenmonoxid ist.

19. Verfahren nach Anspruch 1 bis 18, bei dem die kohlenstoffhaltige Verbindung Kohlenmonoxid, ein aromatischer Kohlenwasserstoff, ein nichtaromatischer Kohlenwasserstoff oder ein sauerstoffhaltiger Kohlenwasserstoff ist.

20. Verfahren nach Anspruch 1 bis 19, bei dem die kohlenstoffhaltige Verbindung Formaldehyd, Acetaldehyd, Aceton, Methanol, Ethanol oder eine Mischung davon, Benzol, Toluol, Xylol, Cumol, Ethylbenzol, Naphtalin, Phenanthren, Anthracen oder eine Mischung davon bzw. Methan, Ethan, Propan, Ethylen, Propylen, Acetylen oder eine Mischung davon ist.

21. Verfahren nach Anspruch 1 bis 20, bei dem die metallhaltigen Teilchen ein eisen-, cobalt- oder nickelhaltiges Teilchen mit einem Durchmesser zwischen 3,5 und 70 nm enthalten.

22. Verfahren nach einem der Ansprüche 1 bis 21, bei dem die metallhaltigen Teilchen von Metallsalzen abgeleitet sind, die sich unterhalb der thermischen Zersetzungstemperatur des kohlenstoffhaltigen Gases zersetzen.

23. Verfahren nach Anspruch 22, bei dem das Metallsalz Eisenoxalat ist.

24. Verfahren nach einem der Ansprüche 1 bis 23, bei dem die metallhaltigen Teilchen in Kohlenstoff oder einer kohlenstoffhaltigen Verbindung eingekapselt sind.

25. Verfahren nach Anspruch 24, bei dem die kohlenstoffhaltige Verbindung ein organisches Polymer ist.

26. Verfahren nach Anspruch 25, bei dem das organische Polymer Polystyrol oder Stärke ist.

27. Verfahren nach Anspruch 1 bis 26, bei dem die Metallteilchen mit dem kohlenstoffhaltigen Gas für einen Zeitraum von 10 Sekunden bis 30 Minuten bei einem Druck von 10,13 kPa (1/10 Atmosphären) bis 1013 kPa (10 Atmosphären) in Kontakt gebracht werden, wobei die metallhaltigen Teilchen eisenhaltige Teilchen sind, die gasförmige kohlenstoffhaltige Verbindung Kohlenmonoxid ist und die Temperatur 900 bis 1150°C beträgt.

28. Verfahren nach Anspruch 27, bei dem der Zeitraum 10 Minuten und der Druck 101,3 kPa (1 Atmosphäre) beträgt, die kohlenstoffhaltige Verbindung Kohlenmonoxid ist und die Temperatur 1000°C beträgt.

29. Verfahren nach Anspruch 27, bei dem der Zeitraum 1 bis 5 Minuten und der Druck 101,3 kPa (1 Atmosphäre) beträgt, die kohlenstoffhaltige Verbindung Kohlenmonoxid ist und die Temperatur 1100°C beträgt.

30. Verfahren nach Anspruch 1 bis 29, bei dem die metallhaltigen Teilchen auf einer chemisch kompatiblen, feuerfesten Unterlage geträgert sind.

31. Verfahren nach Anspruch 31, bei dem die feuerfeste Unterlage Aluminiumoxid, Kohlenstoff, eine Kohlenstoffaser, eine Kohlenstoffibrille, eine Kohlenstoffplatte, ein Silicat oder Aluminiumsilicat ist.

32. Verfahren nach Anspruch 1 bis 31, bei dem die metallhaltigen Teilchen unabhängig voneinander auf eine Temperatur zwischen 850 und 1.800°C erhitzt werden, wobei die Temperatur der Teilchen höher als die Temperatur der gasförmigen kohlenstoffhaltigen Verbindung ist.

33. Verfahren nach Anspruch 32, bei dem die Teilchen mit elektromagnetischer Strahlung erhitzt werden.

34. Verfahren zur Herstellung eines Verbundwerkstoffs, bei dem eine Vielzahl von nach einem der Ansprüche 1 bis 6 hergestellten Kohlenstoffibrillen in einer Matrix dispergiert bzw. darin eingebettet oder eingespritzt wird.

35. Verfahren nach Anspruch 34, bei dem die Matrix ein organisches Polymer, ein anorganisches Polymer oder ein Metall enthält.

36. Verfahren nach Anspruch 34 und 35, bei dem die Kohlenstoffibrillen in der Matrix dispergiert sind.

37. Verfahren nach Anspruch 1, bei dem das Züchten der Fibrillen in einer porösen Keramikmatrix erfolgt, in der Katalysatorteilchen dispergiert sind, und bei dem man eine gasförmige kohlenstoffhaltige Verbindung durch die poröse Keramikmatrix leitet.

38. Verfahren nach Anspruch 34 bis 36, bei dem die Matrix ein Klebstoff oder ein Keramikmaterial ist.

39. Verfahren nach Anspruch 34 bis 36 und 38, bei dem die dispergierten Fibrillen innerhalb der Matrix orientiert sind.

40. Verfahren nach Anspruch 1, bei dem die metallhaltigen Teilchen auf einer Kohlenstoffibrille geträgert sind.

41. Verfahren zur Herstellung einer Fibrillenmatte, bei dem man nach Anspruch 1 bis 6 hergestellte Kohlenstoffibrillen auf einer Trägerplatte oder einem Filter sammelt oder gewinnt oder die Fasern miteinander verhakt.

42. Verfahren zur Herstellung eines Verbundwerkstoffs, bei dem man eine nach Anspruch 41 hergestellte Fibrillenmatte mit einer Matrix imprägniert oder eine Matrix einspritzt.

43. Verfahren zur Herstellung einer Zusammensetzung aus Materie, bei dem eine erste, nach einem der Ansprüche 1 bis 6 hergestellte Kohlenstoffibrille und eine Vielzahl von nach einem der Ansprüche 1 bis 6 hergestellten Kohlenstoffibrillen haftend auf die äußere Oberfläche der ersten Fibrille aufgebracht wird.

44. Verfahren nach Anspruch 42, bei dem eine Fibrillenmatte mit einer Matrix imprägniert wird.

45. Verfahren zur Herstellung einer pelzartigen Faser, bei dem eine Vielzahl metallhaltiger Teilchen auf der äußeren Oberfläche einer Kohlenstoffaser dispergiert werden und die Kohlenstoffaser bei einer Temperatur unterhalb der Wärmezersetzungstemperatur der kohlenstoffhaltigen Verbindung mit einer gasförmigen, kohlenstoffhaltigen Verbindung in Kontakt gebracht wird, um Kohlenstoffibrillen nach den Verfahren eines der Ansprüche 1 bis 6 herzustellen, die an der äußeren Oberfläche der Faser haften.

46. Verfahren zur Herstellung einer pelzartigen Platte, bei dem eine Vielzahl metallhaltiger Teilchen auf der äußeren Oberfläche einer Kohlenstoffplatte dispergiert wird und die Platte bei einer Temperatur unterhalb der Wärmezersetzungstemperatur der kohlenstoffhaltigen Verbindung mit einer gasförmigen, kohlenstoffhaltigen Verbindung in Kontakt gebracht wird, um Kohlenstoffibrillen nach dem Verfahren eines der Ansprüche 1 bis 6 herzustellen, die an der äußeren Oberfläche der Platte haften.

47. Verwendung von nach einem der Ansprüche 1 bis 6 hergestellten Kohlenstoffibrillen oder einer nach Anspruch 41, 45 und 46 hergestellten Fibrillenmatte, einer pelzartigen Faser oder einer pelzartigen Platte zur Verstärkung eines Strukturmaterials, zur Verbesserung der elektrischen Leitfähigkeit und/oder der Wärmeleitfähigkeit eines Materials, Vergrößerung der Oberfläche einer Elektrode oder einer elektrolytischen Kondensatorplatte, als Unterlage für einen Katalysator und/oder zum Schutz eines Gegenstandes vor elektromagnetischer Strahlung.

## Revendications (Revendications pour l'(les) Etat(s) contractant(s) suivant(s): BE, CH, DE, FR, GB, IT, LI, LU, NL, SE)

1. Une ou plusieurs fibrilles de carbone cylindriques discrètes, caractérisées par un diamètre constant, une longueur supérieure à 5 fois le diamètre et inférieure à 100 fois le diamètre, une région extérieure ordonnée de multiples couches continues développées catalytiquement d'atomes de carbone ordonnés ayant un diamètre extérieur compris entre 3,5 et 70 nm, ces atomes de carbone ordonnés étant des domaines graphitiques dont les axes des C sont perpendiculaires à l'axe cylindrique de la fibrille et une région intérieure de noyau distincte, chacune des couches et le noyau étant disposés concentriquement autour de l'axe cylindrique de la fibrille, où cette fibrille est dépourvue de carbone thermique déposé par pyrolyse.

2. Fibrille suivant la revendication 1, dans laquelle le noyau est creux.

3. Fibrille suivant la revendication 1, dans laquelle la région intérieure du noyau comprend des atomes de carbone qui sont moins ordonnés que les atomes de carbone ordonnés de la région extérieure.

4. Fibrille suivant l'une des revendications précédentes, dans laquelle la longueur est supérieure à 20 fois le diamètre.

5. Fibrille suivant l'une des revendications précédentes, dans laquelle le diamètre est compris entre 7 et 25 nm.

6. Fibrille suivant l'une des revendications précédentes, dans laquelle la région intérieure du noyau a un diamètre supérieur à 2 nm.

7. Procédé pour la production en continu des fibrilles de carbone suivant les revendications 1 à 6, qui comprend la mise en contact de façon continue de particules contenant un métal avec un composé gazeux contenant du carbone à une température comprise entre 800°C et 1200°C, inférieure à la température de décomposition thermique de ce composé contenant du carbone, pour éviter la formation de carbone pyrolytique sur la région extérieure développée catalytiquement de ces fibrilles, et la récupération des fibrilles ainsi obtenues.

8. Procédé suivant la revendication 7, dans lequel la mise en contact de façon continue est effectuée par introduction en continu du composé gazeux contenant du carbone dans une zone de réaction contenant les particule contenant un métal et soutirage en continu du composé gazeux contenant du carbone de la zone de réaction.

9. Procédé suivant la revendication 7, dans lequel la mise en contact de façon continue est effectuée par introduction en continu des particules contenant un métal dans une zone de réaction renfermant un volume défini du composé gazeux contenant du carbone et soutirage en continu des particules contenant un métal de la zone de réaction.

10. Procédé suivant la revendication 7, dans lequel la mise en contact de façon continue est effectuée par introduction en continu des particules contenant un métal et du composé gazeux contenant du carbone dans une zone de réaction et soutirage en continu des particules contenant un métal et du composé gazeux contenant du carbone de la zone de réaction.

11. Procédé suivant la revendication 8, dans lequel le composé gazeux contenant du carbone soutiré est traité de façon à éliminer toute matière indésirable et est ensuite réintroduit en continu dans la zone de réaction.

12. Procédé suivant la revendication 11, dans lequel le composé gazeux contenant du carbone est du monoxyde de carbone et le traitement comprend l'élimination du dioxyde de carbone du monoxyde de carbone soutiré de la zone de réaction.

13. Procédé suivant la revendication 9, dans lequel les particules contenant un métal soutirées sont traitées de façon à éliminer toute matière indésirable et à récupérer des fibrilles de carbone et les particules ainsi traitées sont ensuite réintroduites en continu dans la zone de réaction.

14. Procédé suivant la revendication 7, dans lequel les fibrilles de carbone sont récupérées en association avec les particules contenant un métal.

15. Procédé suivant la revendication 14, dans lequel les fibrilles de carbone en association avec les particules sont récupérées en continu.

16. Procédé suivant la revendication 15, dans lequel une partie des fibrilles de carbone en association avec les particules ainsi récupérées est traitée avec des particules supplémentaires contenant un métal et les fibrilles ainsi traitées sont réintroduites en continu en contact avec le composé gazeux contenant du carbone.

17. Procédé suivant la revendication 7, dans lequel la mise en contact des particules contenant un métal avec le composé gazeux contenant du carbone est effectuée en présence d'un composé capable de réagir avec le carbone pour produire des produits gazeux.

18. Procédé suivant la revendication 17, dans lequel le composé capable de réagir avec le carbone est CO₂, H₂ ou H₂O.

19. Procédé suivant la revendication 7, dans lequel le composé contenant du carbone est le monoxyde de carbone.

20. Procédé suivant les revendications 7 à 19, dans lequel le composé contenant du carbone est le monoxyde de carbone, un hydrocarbure aromatique, un hydrocarbure non aromatique ou un hydrocarbure contenant de l'oxygène.

21. Procédé suivant les revendications 7 à 20, dans lequel le composé contenant du carbone est le formaldéhyde, l'acétaldéhyde, l'acétone, le méthanol, l'éthanol ou un mélange de ceux-ci, le benzène, le toluène, le xylène, le cumène, l'éthylbenzène, le naphtalène, le phénanthrène, l'anthracène ou leurs mélanges, ou le méthane, l'éthane, le propane, l'éthylène, le propylène, l'acétylène ou leurs mélanges.

22. Procédé suivant les revendications 7 à 21, dans lequel la particule contenant un métal comprend une particule contenant du fer, du cobalt ou du nickel ayant un diamètre compris entre 3,5 et 70 nm.

23. Procédé suivant les revendications 7 à 22, dans lequel les particules contenant un métal dérivent de sels métalliques qui se décomposent en-dessous de la température de décomposition du gaz contenant du carbone.

24. Procédé suivant la revendication 23, dans lequel le sel métallique est l'oxalate de fer.

25. Procédé suivant les revendications 7 à 24, dans lequel les particules contenant un métal sont encapsulées dans du carbone ou un composé contenant du carbone.

26. Procédé suivant la revendication 25, dans lequel le composé contenant du carbone est un polymère organique.

27. Procédé suivant la revendication 26, dans lequel le polymère organique est un polystyrène ou un amidon.

28. Procédé suivant les revendications 7 à 27, dans lequel les particules contenant un métal sont mises en contact avec le gaz contenant du carbone pendant une période de temps comprise entre 10 secondes et 30 minutes à une pression comprise entre 10,13 kPa (0,1 atm) et 1013 kPa (10 atm), où les particules contenant un métal sont des particules contenant du fer, le composé gazeux contenant du carbone est le monoxyde de carbone et la température est comprise entre 900 et 1150°C.

29. Procédé suivant la revendication 28, dans lequel la période de temps est de 10 minutes, la pression est de 101,3 kPa (1 atm), le composé contenant du carbone est le monoxyde de carbone et la température est de 1000°C.

30. Procédé suivant la revendication 28, dans lequel la période de temps est de 1 à 5 minutes, la pression est de 101,3 kPa (1 atm), le composé contenant du carbone est le monoxyde de carbone et la température est de 1100°C.

31. Procédé suivant les revendications 7 à 30, dans lequel la particule contenant un métal est supportée sur un support réfractaire, compatible chimiquement.

32. Procédé suivant la revendication 31, dans lequel le support réfractaire est une alumine, du carbone, une fibre de carbone, une fibrille de carbone, une plaque de carbone, un silicate ou un silicate d'aluminium.

33. Procédé suivant les revendications 7 à 32, dans lequel les particules contenant un métal sont chauffées indépendamment à une température comprise entre 850°C et 1.800°C, de telle sorte que la température des particules est supérieure à la température du composé gazeux contenant du carbone.

34. Procédé suivant la revendication 33, dans lequel les particules sont chauffées avec une radiation électromagnétique.

35. Composite comprenant plusieurs fibrilles de carbone suivant l'une des revendications 1 à 6 dans une matrice.

36. Composite suivant la revendication 35, dans lequel la matrice comprend un polymère organique, un polymère inorganique ou un métal.

37. Composite suivant les revendications 35 et 36, dans lequel les fibrilles de carbone sont dispersées dans la matrice.

38. Composite suivant les revendications 35 à 37, dans lequel la matrice est un adhésif ou un matériau céramique.

39. Composite suivant les revendications 35 à 38, dans lequel les fibrilles dispersées sont orientées à l'intérieur de la matrice.

40. Composition de matière comprenant une particule contenant un métal supportée sur une fibrille suivant les revendications 1 à 6.

41. Nappe de fibrilles comprenant plusieurs fibrilles de carbone suivant les revendications 1 à 6.

42. Composite comprenant une nappe de fibrilles suivant la revendication 41 et une matrice.

43. Fibre ressemblant à de la fourrure comprenant une fibre de carbone et plusieurs fibrilles de carbone suivant les revendications 1 à 6 adhérant à la surface extérieure de cette fibre de carbone.

44. Fibre ressemblant à de la fourrure comprenant une plaque de carbone et plusieurs fibrilles de carbone suivant les revendications 1 à 6 adhérant à la surface extérieure de la plaque.

45. Composition de matière qui comprend une première fibrille de carbone suivant l'une des revendications 1 à 6 et plusieurs fibrilles suivant l'une des revendications 1 à 6 adhérant à la surface extérieure de la première fibrille.

46. Procédé pour la préparation d'un composite suivant la revendication 42, qui comprend l'imprégnation d'une nappe de fibrilles avec une matrice.

47. Procédé pour la préparation d'une fibre ressemblant à de la fourrure suivant la revendication 43, qui comprend la dispersion de plusieurs particules contenant un métal sur la surface extérieure d'une fibre de carbone et la mise en contact de cette fibre de carbone avec un composé gazeux contenant du carbone à une température inférieure à la température de décomposition thermique du composé contenant du carbone de façon à produire des fibrilles de carbone suivant les revendications 1 à 6, qui adhèrent à la surface extérieure de la fibre.

48. Procédé pour la préparation d'une plaque ressemblant à de la fourrure suivant la revendication 44, qui comprend la dispersion de plusieurs particules contenant un métal sur la surface extérieure d'une fibre de carbone et la mise en contact de la plaque avec un composé gazeux contenant du carbone à une température inférieure à la température de décomposition thermique du composé contenant du carbone de façon à produire des fibrilles de carbone suivant les revendications 1 à 6, qui adhèrent à la surface extérieure de la plaque.

49. Utilisation de fibrilles suivant l'une des revendications 1 à 6 ou d'une nappe de fibrilles, d'une fibre ressemblant à de la fourrure ou d'une plaque ressemblant à de la fourrure suivant les revendications 41, 43 et 44 pour renforcer un matériau de structure, augmenter la conductivité électrique et/ou la conductivité d'un matériau, augmenter l'aire superficielle d'une électrode ou d'une plaque de condensateur électrolytique, supporter un catalyseur et/ou blinder un objet contre une radiation électromagnétique.

## Revendications (Revendications pour l'(les) Etat(s) contractant(s) suivant(s): AT)

1. Procédé pour la production en continu d'une ou de plusieurs fibrilles de carbone cylindriques discrètes, ayant un diamètre constant, une longueur supérieure à 5 fois le diamètre et inférieure à 100 fois le diamètre, une région extérieure ordonnée de multiples couches continues développées catalytiquement d'atomes de carbone ordonnés ayant un diamètre extérieur compris entre 3,5 et 70 nm, ces atomes de carbone ordonnés étant des domaines graphitiques dont les axes des C sont perpendiculaires à l'axe cylindrique de la fibrille et une région intérieure de noyau distincte, chacune des couches et le noyau étant disposés concentriquement autour de l'axe cylindrique de la fibrille, où cette fibrille est dépourvue de carbone thermique déposé par pyrolyse, lequel procédé comprend la mise en contact de façon continue de particules contenant un métal avec un composé gazeux contenant du carbone à une température comprise entre 800°C et 1200°C, inférieure à la température de décomposition thermique de ce composé contenant du carbone, pour éviter la formation de carbone pyrolytique sur la région extérieure développée catalytiquement de ces fibrilles, et la récupération des fibrilles ainsi obtenues.

2. Procédé suivant la revendication 1, dans lequel le noyau est creux.

3. Procédé suivant la revendication 1, dans lequel la région intérieure du noyau comprend des atomes de carbone qui sont moins ordonnés que les atomes de carbone ordonnés de la région extérieure.

4. Procédé suivant l'une des revendications précédentes, dans lequel la longueur est supérieure à 20 fois le diamètre.

5. Procédé suivant l'une des revendications précédentes, dans lequel le diamètre est compris entre 7 et 25 nm.

6. Procédé suivant l'une des revendications précédentes, dans lequel la région intérieure du noyau a un diamètre supérieur à 2 nm.

7. Procédé suivant la revendication 1, dans lequel la mise en contact de façon continue est effectuée par introduction en continu du composé gazeux contenant du carbone dans une zone de réaction contenant les particules contenant un métal et soutirage en continu du composé gazeux contenant du carbone de la zone de réaction.

8. Procédé suivant la revendication 1, dans lequel la mise en contact de façon continue est effectuée par introduction en continu des particules contenant un métal dans une zone de réaction contenant un volume défini du composé gazeux contenant du carbone et soutirage en continu des particules contenant du métal de la zone de réaction.

9. Procédé suivant la revendication 1, dans lequel la mise en contact de façon continue est effectuée par introduction en continu des particules contenant un métal et du composé gazeux contenant du carbone dans une zone de réaction et soutirage en continu des particules contenant un métal et du composé gazeux contenant du carbone de la zone de réaction.

10. Procédé suivant la revendication 7, dans lequel le composé gazeux contenant du carbone soutiré est traité de façon à éliminer toute matière indésirable et est ensuite réintroduit en continu dans la zone de réaction.

11. Procédé suivant la revendication 10, dans lequel le composé gazeux contenant du carbone est du monoxyde de carbone et le traitement comprend l'élimination du dioxyde de carbone du monoxyde de carbone soutiré de la zone de réaction.

12. Procédé suivant la revendication 8, dans lequel les particules contenant du métal soutirées sont traitées de façon à éliminer toute matière indésirable et à récupérer des fibrilles de carbone et les particules ainsi traitées sont ensuite réintroduites dans la zone de réaction.

13. Procédé suivant la revendication 1, dans lequel les fibrilles de carbone sont récupérées en association avec les particules contenant un métal.

14. Procédé suivant la revendication 13, dans lequel les fibrilles de carbone en association avec les particules sont récupérées en continu.

15. Procédé suivant la revendication 14, dans lequel une partie des fibrilles de carbone en association avec les particules ainsi récupérées est traitée avec des particules supplémentaires contenant un métal et les fibrilles ainsi traitées sont réintroduites en continu en contact avec le composé gazeux contenant du carbone.

16. Procédé suivant la revendication 1, dans lequel la mise en contact des particules contenant un métal avec le composé gazeux contenant du carbone est effectuée en présence d'un composé capable de réagir avec le carbone pour produire des produits gazeux.

17. Procédé suivant la revendication 16, dans lequel le composé capable de réagir avec le carbone est CO₂, H₂ ou H₂O.

18. Procédé suivant la revendication 1, dans lequel le composé contenant du carbone est le monoxyde de carbone.

19. Procédé suivant les revendications 1 à 18, dans lequel le composé contenant du carbone est le monoxyde de carbone, un hydrocarbure aromatique, un hydrocarbure non aromatique ou un hydrocarbure contenant de l'oxygène.

20. Procédé suivant les revendications 1 à 19, dans lequel le composé contenant du carbone est le formaldéhyde, l'acétaldéhyde, l'acétone, le méthanol, l'éthanol ou un mélange de ceux-ci, le benzène, le toluène, le xylène, le cumène, l'éthylbenzène, le naphtalène, le phénanthrène, l'anthracène ou leurs mélanges, ou le méthane, l'éthane, le propane, l'éthylène, le propylène, l'acétylène ou leurs mélanges.

21. Procédé suivant les revendications 1 à 20, dans lequel la particule contenant un métal est une particule contenant du fer, du cobalt ou du nickel ayant un diamètre compris entre 3,5 et 70 nm.

22. Procédé suivant les revendications 1 à 21, dans lequel les particules contenant un métal proviennent de sels métalliques qui se décomposent en-dessous de la température de décomposition du gaz contenant du carbone.

23. Procédé suivant la revendication 22, dans lequel le sel métallique est l'oxalate de fer.

24. Procédé suivant les revendications 1 à 23, dans lequel les particules contenant un métal sont encapsulées dans du carbone ou un composé contenant du carbone.

25. Procédé suivant la revendication 24, dans lequel le composé contenant du carbone est un polymère organique.

26. Procédé suivant la revendication 25, dans lequel le polymère organique est un polystyrène ou un amidon.

27. Procédé suivant les revendications 1 à 26, dans lequel les particules contenant un métal sont mises en contact avec le gaz contenant du carbone pendant une période de temps comprise entre 10 secondes et 30 minutes à une pression comprise entre 10,13 kPa (0,1 atm) à 1013 kPa (10 atm), où les particules contenant un métal sont des particules contenant du fer, le composé gazeux contenant du carbone est le monoxyde de carbone et la température est comprise entre 900 et 1150°C.

28. Procédé suivant la revendication 27, dans lequel la période de temps est de 10 minutes, la pression est de 101,3 kPa (1 atm), le composé contenant du carbone est le monoxyde de carbone et la température est de 1000°C.

29. Procédé suivant la revendication 27, dans lequel la période de temps est de 1 à 5 minutes, la pression est de 101,3 kPa (1 atm), le composé contenant du carbone est le monoxyde de carbone et la température est de 1100°C.

30. Procédé suivant les revendications 1 à 29, dans lequel la particule contenant un métal est supportée sur un support réfractaire, compatible chimiquement.

31. Procédé suivant la revendication 30, dans lequel le support réfractaire est une alumine, du carbone, une fibre de carbone, une fibrille de carbone, une plaque de carbone, un silicate ou un silicate d'aluminium.

32. Procédé suivant les revendications 1 à 31, dans lequel les particules contenant un métal sont chauffées indépendamment à une température comprise entre 850°C et 1.800°C, de telle sorte que la température des particules est supérieure à la température du composé gazeux contenant du carbone.

33. Procédé suivant la revendication 32, dans lequel les particules sont chauffées avec une radiation électromagnétique.

34. Procédé pour la préparation d'un composite par dispersion, enrobage ou injection de plusieurs fibrilles de carbone préparées suivant l'une des revendications 1 à 6 dans une matrice ou sous forme d'une matrice, respectivement.

35. Procédé suivant la revendication 34, dans lequel la matrice comprend un polymère organique, un polymère inorganique ou un métal.

36. Procédé suivant les revendications 34 et 35, dans lequel les fibrilles de carbone sont dispersées dans la matrice.

37. Procédé suivant la revendication 1, dans lequel la croissance des fibrilles est conduite dans une matrice céramique poreuse dans laquelle sont dispersées des particules de catalyseur, par passage d'un composé gazeux contenant du carbone à travers la matrice céramique poreuse

38. Procédé suivant les revendications 34 à 36, dans lequel. la matrice est un adhésif ou un matériau céramique.

39. Procédé suivant les revendications 34 à 36 et 38, dans lequel les fibrilles dispersées sont orientées à l'intérieur de la matrice.

40. Procédé suivant la revendication 1, dans lequel les particules contenant un métal sont supportées sur une fibrille de carbone.

41. Procédé pour la préparation d'une nappe de fibrilles par rassemblement ou récupération de fibrilles de carbone préparées suivant les revendications 1 à 6 sur une plaque de support ou un filtre, ou par enchevêtrement des fibrilles.

42. Procédé pour la préparation d'un composite par dispersion, imprégnation ou injection d'une nappe de fibrilles préparée suivant la revendication 41 avec une matrice.

43. Procédé pour la préparation d'une composition de matière dans lequel une première fibrille de carbone préparée suivant l'une des revendications 1 à 6 et plusieurs fibrilles préparées suivant l'une des revendications 1 à 6 sont collées à la surface extérieure de la première fibrille.

44. Procédé suivant la revendication 42, qui comprend l'imprégnation d'une nappe de fibrilles avec une matrice.

45. Procédé pour la préparation d'une fibre ressemblant à de la fourrure, qui comprend la dispersion de plusieurs particules contenant un métal sur la surface extérieure d'une fibre de carbone et la mise en contact de façon continue de cette fibre de carbone avec un composé gazeux contenant du carbone à une température comprise entre 800°C et 1200°C, inférieure à la température de décomposition thermique du composé contenant du carbone de façon à produire des fibrilles de carbone suivant le procédé des revendications 1 à 6, qui adhèrent à la surface extérieure de la fibre.

46. Procédé pour la préparation d'une plaque ressemblant à de la fourrure, qui comprend la dispersion de plusieurs particules contenant un métal sur la surface extérieure d'une fibre de carbone et la mise en contact de façon continue de la plaque avec un composé gazeux contenant du carbone à une température comprise entre 800°C et 1200°C, inférieure à la température de décomposition thermique du composé contenant du carbone de façon à produire des fibrilles de carbone suivant le procédé des revendications 1 à 6, qui adhèrent à la surface extérieure de la plaque.

47. Utilisation de fibrilles de carbone préparées suivant l'une des revendications 1 à 6 ou d'une nappe de fibrilles, d'une fibre ressemblant à de la fourrure ou d'une plaque ressemblant à de la fourrure préparées suivant les revendications 41, 45 et 46 pour renforcer un matériau de structure, augmenter la conductivité électrique et/ou la conductivité d'un matériau, augmenter l'aire superficielle d'une électrode ou d'une plaque de condensateur électrolytique, supporter un catalyseur et/ou blinder un objet contre une radiation électromagnétique.
